# EUROPÄISCHE PATENTSCHRIFT

(11) **EP 3 464 405 B1**
(45) Veröffentlichungstag und Bekanntmachung des Hinweises auf die Patenterteilung: **17.12.2025**
(21) Anmeldenummer: 17728098.9
(22) Anmeldetag: 29.05.2017
(51) Int. Cl.: C08G 18/48, C08G 18/71, C08G 18/76, C08G 18/79, C08G 18/28, C08G 18/34, C08G 71/04, C09J 175/04, C08L 101/02

(54) **VERWENDUNG VON VERBINDUNGEN MIT N 2-OXO-1,3-DIOXOLAN-4-CARBONSÄUREAMID-EINHEITEN IN ZWEIKOMPONENTENKLEBSTOFFEN**
USE OF COMPOUNDS HAVING N 2-OXO-1,3-DIOXOLANE-4-CARBOXAMIDE UNITS IN TWO-COMPONENT ADHESIVES
UTILISATION DE COMPOSÉS PRÉSENTANT DES UNITÉS AMIDE D'ACIDE N2-OXO-1,3-DIOXOLANE-4-CARBOXYLIQUE DANS DES ADHÉSIFS BICONSTITUANTS

(30) Priorität: 03.06.2016 EP 16172975
(43) Veröffentlichungstag der Anmeldung: 10.04.2019
(73) Patentinhaber: BASF SE, 67056 Ludwigshafen am Rhein (DE)
(72) Erfinder: SCHUMACHER, Karl-Heinz, 67056 Ludwigshafen (DE); FENLON, Thomas, 67056 Ludwigshafen (DE); PUTZIEN, Sophie, 83308 Trostberg (DE); VAUTRAVERS, Nicolas, 67056 Ludwigshafen (DE); LICHT, Ulrike, 67056 Ludwigshafen (DE)
(74) Vertreter: BASF IP Association
(86) Internationale Anmeldenummer: PCT/EP2017/062843
(87) Internationale Veröffentlichungsnummer: WO 2017/207461

(56) Entgegenhaltungen:
- EP-A1- 2 998 331
- EP-A1- 2 998 331
- DE-A1- 102014 206 574
- DE-A1- 102014 206 574
- US-A1- 2015 051 365
- US-A1- 2015 051 365
- US-A1- 2015 353 521
- US-A1- 2015 353 521
- US-A1- 2016 145 232
- US-A1- 2016 145 232

## Beschreibung

Beschrieben wird die Verwendung von Verbindungen mit 2-Oxo-1,3-dioxolan-4-carbonsäureamid-Einheiten als reaktive Komponente in 2-Komponentenklebstoffen, vorzugsweise zur Herstellung von Hydroxypolyurethanen oder Hydroxypolycarbonaten für Klebstoffanwendungen. Beschrieben werden auch entsprechende Zweikomponenten-klebstoffe und entsprechende Klebeverfahren. Als zweite Komponente des Zweikomponentenklebstoffs wird vorzugsweise eine mehrfunktionelle Härterverbindung eingesetzt.

Als Klebstoffe werden häufig zweikomponentige Systeme von Polyurethanen auf Basis von Polyisocyanaten verwendet, in denen Isocyanatkomponenten mit Polyolkomponenten zu einem hochmolekularen Polyurethanpolymer reagieren. Diese Systeme werden entweder als lösemittelfreie und wasserfreie reaktive Einhundertprozentsysteme appliziert oder als in einem organischen Lösemittel gelöster Klebstoff. Die Beschichtungsstoffe werden mittels eines geeigneten Auftragssystems auf ein erstes Substrat aufgetragen und dann wird ggf. nach Verdampfen des Lösemittels ausgehärtet. Vorteilhaft sind die sich ergebenden hohen Verbundfestigkeiten in Kombinationen unterschiedlichster Folienmaterialien.

Die in herkömmlichen Zweikomponentenklebstoffen enthaltenen reaktiven, monomeren niedermolekularen (Poly)Isocyanatverbindungen stellen ein toxikologisches Risiko dar, insbesondere wenn diese leichtflüchtig sind oder migrieren können. Das betrifft zum einen die Verarbeitung dieser Klebstoffe bei deren Anwendung, weil die Isocyanate in der Regel eine hohe Toxizität und ein hohes allergenes Potential aufweisen. Zum anderen besteht die Gefahr, dass bei flexiblen Substraten nicht vollständig abreagiertes aromatisches Isocyanat durch das Substrat migriert und dort durch Wasseranteile zu carzinogenen aromatischen Aminen hydrolysiert. Gewünscht sind daher Isocyanat-freie Zweikomponentensysteme für härtbare Klebstoffzusammensetzungen mit möglichst guten Klebewerten und mit guten Härtungseigenschaften möglichst bereits bei Raumtemperatur.

Polyurethansysteme können auch ausgehend von cyclischen Carbonatverbindungen erhalten werden, welche toxikologisch unbedenklich sind. So findet Glycerincarbonat (4-(Hydroxymethyl)-2-oxo-1,3-dioxolan) beispielsweise Anwendung in Kosmetika.

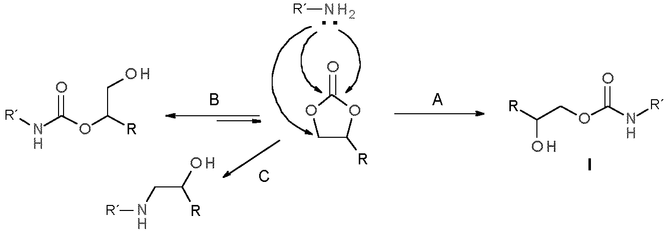

Cyclische Carbonatverbindungen reagieren mit Aminen unter Ringöffnung u.a. zu Hydroxyurethanen (vergl. das Formelschema).

Nachteile der auf Glycerincarbonat basierenden Systeme sind die geringe Regioselektivität, die zu den Reaktionswegen A, B und C führt, die vergleichsweise geringe Reaktivität der Systeme bei Raumtemperatur, und die Tatsache, dass Katalysatoren, welche die Ringöffnung beschleunigen, offensichtlich auch die Rückreaktion fördern, was zu einer teilweisen Zersetzung der bereits gebildeten Produkte führen kann.

In der WO 2011/157551 werden diese Probleme teilweise gelöst, indem in R statt einer Ethergruppe eine Estergruppe zum Einsatz kam. Diese elektronenziehende Gruppe führte zu einer beträchtlichen Steigerung der Reaktionsgeschwindigkeit und zu einer Bevorzugung des Reaktionswegs A. Bei den gebildeten sekundären Hydroxyurethanen [I] wurde keine Rückreaktion beobachtet. Allerdings ist die Herstellung von Klebstoffen, die zwei oder mehr 2-Oxo-1,3-dioxolan-4-carboxylgruppen im Molekül enthalten, schwierig, da diese über eine Umesterung erfolgt, wobei auch der Cyclocarbonatring angegriffen werden kann. Auch kann die besagte Estergruppe bei der Umsetzung mit den zur Härtung verwendeten Aminen (R'-NH₂) teilweise angegriffen werden.

In der WO 2013/092011 werden bestimmte Cyclocarbonatamide und deren Herstellung beschrieben.

Die der vorliegenden Erfindung zu Grunde liegende Aufgabe war es, zumindest einige der Nachteile des vorstehend geschilderten Standes der Technik im Wesentlichen zu vermeiden. Allgemein gesehen sollte ein alternatives 2-Oxo-1,3-dioxolan-System mit einer elektronenziehenden Gruppe für Klebstoffanwendungen bereitgestellt werden. Insbesondere sollte ein 2-Oxo-1,3-dioxolan-System zur Verfügung gestellt werden, das unbedenklich, gut zugänglich und mit Aminen hochreaktiv ist, möglichst bereits bei Raumtemperatur aushärten kann und sich zudem als Klebstoff (mit einer durch Amine wenig angreifbaren Bindung an die Polymerkette) mit guten Klebewerten eignet.

Diese Aufgabe wurde mit den Merkmalen der unabhängigen Ansprüche gelöst. Die abhängigen Ansprüche beziehen sich auf bevorzugte Ausführungsformen.

Ein Gegenstand der vorliegenden Erfindung ist die Verwendung von Verbindungen mit n 2-Oxo-1,3-dioxolan-4-carbonsäureamid-Einheiten als reaktive Komponente in 2-Komponentenklebstoffen, vorzugsweise zur Herstellung von Hydroxypolyurethanen oder Hydroxypolycarbonaten für Klebstoffanwendungen, wobei n eine Zahl größer oder gleich 2 ist. Vorzugsweise ist n = 2 bis 5, insbesondere 2 bis 3.

Geeignete Verbindungen mit zwei oder mehr 2-Oxo-1,3-dioxolan-4-carbonsäureamid-einheiten sind beispielsweise solche der Formel (I) 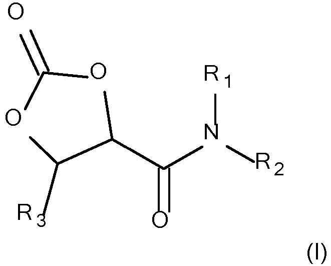 wobei
R₁ und R₃ unabhängig voneinander aus H und einem organischen Rest ausgewählt sind; und
R₂ ein n-wertiger organischer Rest ist, der mit n-1 weiteren 2-Oxo-1,3-dioxolan-4-carbonsäureamidgruppen substituiert ist und n eine Zahl größer oder gleich 2 ist.

R₁ ist vorzugsweise ausgewählt aus H, geradkettigen, verzweigten oder cyclischen C₁₋₁₂-Alkylgruppen, C₆₋₁₀-Arylgruppen, C₆₋₁₂-Arylalkylgruppen und C₆₋₁₂-Alkylarylgruppen.

R2 ist vorzugsweise eine Alkylgruppe mit 2 bis 22 C-Atomen oder eine Polymerkette; und ist vorzugsweise ausgewählt aus der Gruppe bestehend aus linearen oder verzweigten C2- bis C22-Alkylengruppen; Polyethergruppen der allgemeinen Formel -(A-O)ₘ-, wobei A C2- bis C5-Alkylen bedeutet und m eine Zahl von 1 bis 100 ist; Polycarbonatgruppen, Polyestergruppen und Poly(meth)acrylatgruppen.

R₂ ist besonders bevorzugt ausgewählt aus n-Alkyleinheiten mit 2-12 C-Atomen und Polymerketten, die Ethylenoxid- und/oder Propylenoxid-Einheiten enthalten.

R₃ ist vorzugsweise ausgewählt aus H, Arylgruppen und geradkettigen, verzweigten oder cyclischen C₁₋₁₂-Alkylgruppen, die auch O oder N-Atome enthalten können; besonders bevorzugt H.

Das Kohlenstoffatom, an welches R₃ gebunden ist, kann zusätzlich noch eine weitere C₁₋₁₂-Alkylgruppe tragen. Auch das Kohlenstoffatom in 4-Stellung kann zusätzlich noch eine C₁₋₁₂-Alkylgruppe tragen. Beides kann gleichzeitig der Fall sein.

In den 2-Oxo-1,3-dioxolan-4-carbonsäureamiden sind die Gruppen R₁ und R₃ jeweils vorzugsweise H.

Die Verbindungen haben eine Funktionalität hinsichtlich der 2-Oxo-1,3-dioxolan-Gruppe von n größer oder gleich 2. R₂ ist ein n-wertiger Rest, der mit n-1 weiteren 2-Oxo-1,3-dioxolan-4-carbonsäureamidgruppen substituiert ist, vorzugsweise mit solchen der allgemeinen Formel (II), wobei R₃ die oben genannte Bedeutung hat.

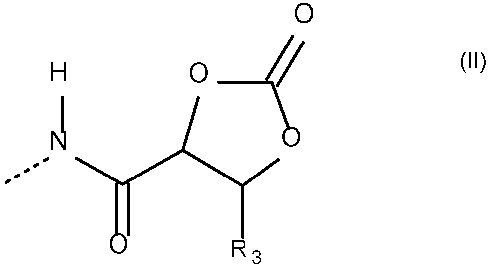

Vorzugsweise ist n = 2 bis 5, insbesondere 2 bis 3 .

Die Herstellung von 2-Oxo-1,3-dioxolan-4-carbonsäureamiden ist beschrieben in WO 2013/092011 und in WO2016/062424 (Pt-katalysierte Oxidation mit Sauerstoff). Schlüsselprodukte bei der Herstellung von 2-Oxo-1,3-dioxolan-4-carbonsäureamiden sind die 2-Oxo-1,3-dioxolan-4-carbonsäuren der Formel (VIII), 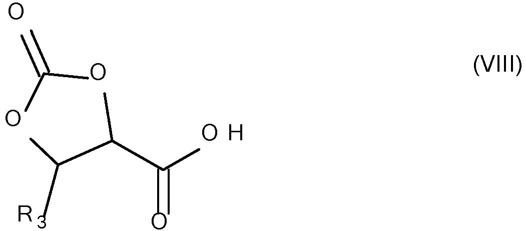 wobei R₃ die oben angegebene Bedeutung aufweist. Die Herstellung der 2-Oxo-1,3-dioxolan-4-carbonsäure der Formel (VIII) ist beschrieben in WO 2013/092011.

Die 2-Oxo-1,3-dioxolan-4-carbonsäure der Formel (VIII) kann mit einem Polyisocyanat mit n NCO -Gruppen zu den entsprechenden Amiden umgesetzt werden, wobei n die oben angegebene Bedeutung aufweist, und n-funktionelle 2-Oxo-1,3-dioxolan-4-carbonsäureamide entstehen. Das Polyisocyanat ist vorzugsweise ein aliphatisches Isocyanat, ein aromatisches Isocyanat oder ein kombiniert aliphatisch/ aromatisches Isocyanat mit einer NCO -Funktionalität (Anzahl der NCO -Gruppen im Molekül) von n = 2 bis 5, vorzugsweise n = 2 bis 3.

Geeignete Polyisocyanate umfassen Tetramethylen-1,4-diisocyanat, 2-Methylpenta-methylen-1,5-diisocyanat, Hexamethylen-1,6-diisocyanat (HDI), 2,2,4- und 2,4,4-Trimethyl-hexamethylen-1,6-diisocyanat (TMDI), Dodecamethylen-1,12-diisocyanat, Lysindiisocyanat, Lysinesterdiisocyanat, 1-Isocyanato-3,3,5-trimethyl-5-isocyanatomethyl-cyclohexan (Isophorondiisocyanat, IPDI), 1,4-Diisocyanato-2,2,6-trimethylcyclohexan (TMCDI), 2,2'-, 2,4'- und 4,4'-Dicyclohexylmethandiisocyanat (H₁₂MDI), Cyclohexan-1,3-diisocyanat, Cyclohexan-1,4-diisocyanat (CHDI), 1,3-Bis-(isocyanatomethyl)-cyclohexan, 1,4-Bis-(isocyanatomethyl)-cyclohexan, 4,4'-Diisocyanatodicyclo-hexyl-2,2-propan, m- und p-Phenylendiisocyanat, 2,3,5,6-Tetramethyl-1,4-diisocyanatobenzol, 3,3'-Dimethyl-4,4'-diisocyanatodiphenyl (TODI), 2,4- und 2,6-Toluylendiisocyanat (TDI), 2,2'-, 2,4'- und 4,4'-Diphenylmethandiisocyanat (MDI), Naphthalin-1,2-diisocyanat und Naphthalin-1,5-diisocyanat (NDI), m- und p-Xylylendiisocyanat (XDI), Tetramethylxylylendiisocyanat (TMXDI), sowie beliebige Mischungen der vorgenannten Isocyanate.

Für die Zwecke der vorliegenden Erfindung umfassen die erfindungsgemäßen Polyisocyanate auch Dimere (Uretdione) und Trimere (Isocyanurate). Besondere Bedeutung kommt dabei dem HDI-Trimer zu. Des Weiteren sollen auch Oligomere umfasst sein, wie z.B. "polymeres MDI" mit n vorzugsweise gleich 1 bis 8:

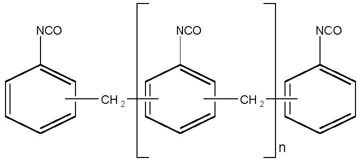

Darüber hinaus können auch Präpolymere von Polyisocyanaten mit Polyolen verwendet werden, sofern ein stöchiometrischer Überschuss an NCO -Gruppen vorliegt. Geeignete Polyole umfassen Polyoxyalkylenpolyole (auch "Polyetherpolyole" genannt), welche u.a. Ethylenoxid-, Propylenoxid- und Butylenoxid-Einheiten enthalten können, aliphatische Diole, aliphatische Polyole, Polyesterpolyole, Polycarbonatpolyole, Rizinusöl, hydroxyliertes epoxidiertes Sojaöl, sowie Mischungen der genannten Polyole.

Eine beispielhafte, nicht abschließende Übersicht über Reaktionsprodukte der 2-Oxo-1,3-dioxolan-4-carbonsäure mit Polyisocyanaten gibt das nachfolgende Formelschema: 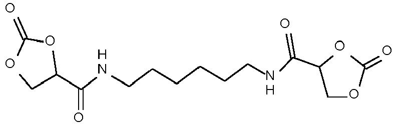 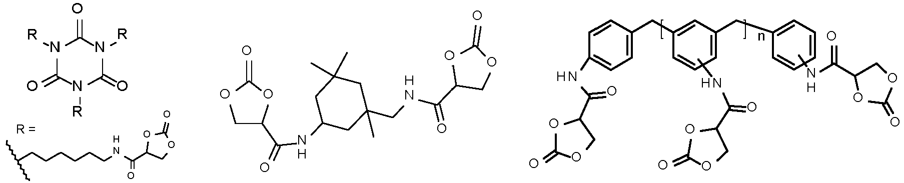 wobei n eine Zahl von 0 bis 8, vorzugsweise von 1 bis 8 bedeutet.

Bevorzugte Verbindungen mit n 2-Oxo-1,3-dioxolan-4-carbonsäureamid-Einheiten sind ausgewählt aus der Gruppe bestehend aus
Verbindungen der Formel (III) 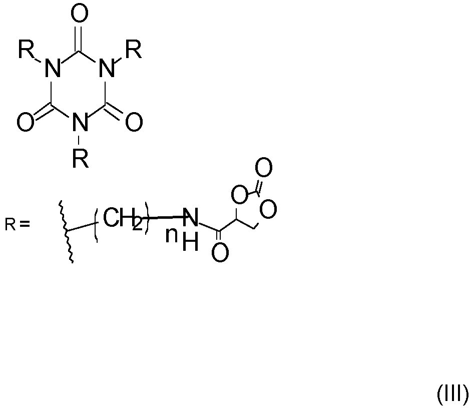
   wobei n ein eine Zahl von 1 bis 12 ist;
   Verbindungen der Formel (IV) 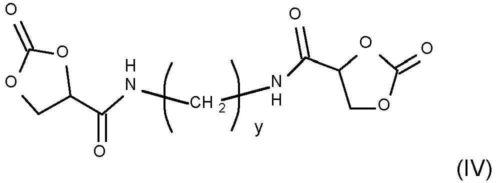
   wobei y ein eine Zahl von 1 bis 12 ist ;
   Verbindungen der Formel (V) 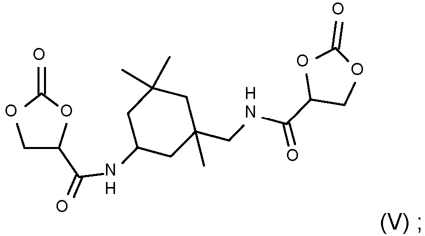 und
   Verbindungen der Formel (VI) 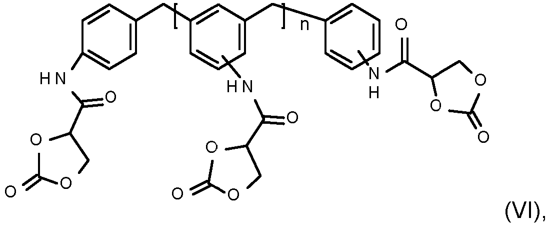
wobei n eine Zahl größer oder gleich 0, vorzugsweise 1 bis 8 bedeutet.

Gegenstand der Erfindung sind auch besonders für Klebstoffanwendungen geeignete mehrfunktionelle 2-Oxo-1,3-dioxolan-4-carboxamide mit flexibler Spacergruppe zwischen den Cyclocarbonateinheiten der Formel (I) 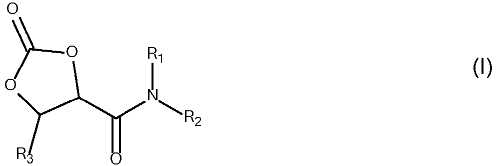 wobei
R₁ und R₃ unabhängig voneinander aus H und einem organischen Rest ausgewählt sind; und
R₂ ein n-wertiger organischer Rest ist, der mit n-1 weiteren 2-Oxo-1,3-dioxolan-4-carbonsäureamidgruppen substituiert ist,
n eine Zahl größer oder gleich 2 ist, und
wobei zwischen den 2-Oxo-1,3-dioxolan-4-carboxamidgruppen mindestens eine lineare oder verzweigte Spacergruppe enthalten ist, und die Spacergruppe ein Molekulargewicht von mindestens 200 g/mol aufweist und vorzugsweise ausgewählt ist aus Alkylengruppen, Polyethergruppen, Polycarbonatgruppen, Polyestergruppen und Poly(meth)acrylatgruppen.

R₂ in Formel (I) ist vorzugsweise ausgewählt aus der Gruppe bestehend aus linearen oder verzweigten C2- bis C22-Alkylengruppen; Polyethergruppen der allgemeinen Formel -(A-O)ₘ-, wobei A C2- bis C5-Alkylen bedeutet und m eine Zahl von 1 bis 100 ist; Polycarbonatgruppen;, Polyestergruppen; und Poly(meth)acrylatgruppen.

Besonders bevorzugte 2-Oxo-1,3-dioxolan-4-carboxamide sind ausgewählt aus Verbindungen der Formel (IV) 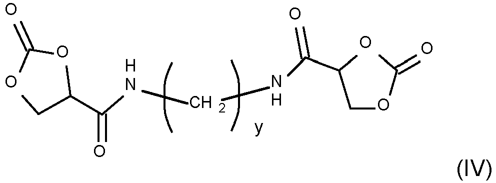
wobei y ein eine Zahl von 1 bis 12 ist;
und Verbindungen der Formel (VII) 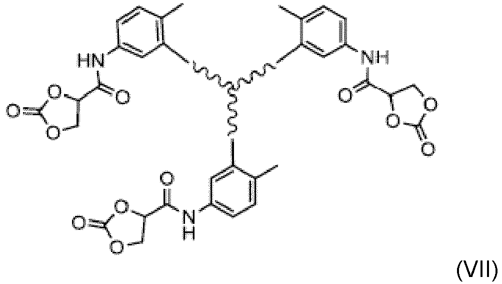
wobei 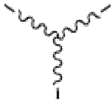 einen alkoxylierten Glycerinrest bedeutet, mit vorzugsweise 2 bis 5, insbesondere oder 2 und/oder 3 C-Atomen in der Alkoxygruppe, besonders bevorzugt ethoxyliertes/propoxyliertes Glycerin.

Bei der erfindungsgemäßen Verwendung reagieren die 2-Oxo-1,3-dioxolan-4-carbonsäureamide mit Aminhärtern zu Hydroxypolyurethanen. Es entstehen hierbei vorwiegend Hydroxypolyurethane mit sekundären Hydroxylgruppen, da beim Angriff des nucleophilen Stickstoffatoms die negative Ladung am Sauerstoffatom, das der CONR₁R₂ -Gruppe näher liegt, besser stabilisiert wird. Hydroxyurethane mit sekundären Hydroxylgruppen weisen den Vorteil auf, dass keine Rückreaktion stattfindet. Theoretisch denkbar wäre auch ein Angriff des Amins an der Amidgruppe. Es konnte indessen gezeigt werden, dass das Amin nur die 2-Oxo-1,3-dioxolangruppe angreift.

Als Amine kommen hierbei primäre und sekundäre Amine mit Alkylgruppen, Arylgruppen, Aralkylgruppen sowie Alkarylgruppen als Reste in Frage. Primäre Amine reagieren schneller als sekundäre Amine; aliphatische Amine reagieren schneller als aromatische Amine. Insbesondere höhermolekulare Polyamine wie z.B. Jeffamine^{®} der Huntsman Corp. und Polyetheramine der BASF SE kommen hier in Frage.

Im Falle von primären Aminen mit der Formel R'-NH₂ kann die Umsetzung wie folgt dargestellt werden, wobei hier nur die bevorzugte Umsetzung zum Hydroxyurethan mit einer sekundären Hydroxylgruppe gezeigt wird:

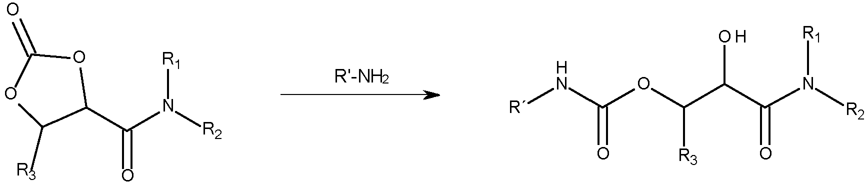

Bei der erfindungsgemäßen Verwendung reagieren die 2-Oxo-1,3-dioxolan-4-carbonsäureamide mit Hydroxyhärtern zu Hydroxypolycarbonaten. Im nachfolgenden Formelschema wird nur die bevorzugte Umsetzung zum Hydroxycarbonat mit einer sekundären Hydroxylgruppe gezeigt. Als Alkohole der Formel R'-OH kommen beispielsweise die oben genannten Polyole in Frage.

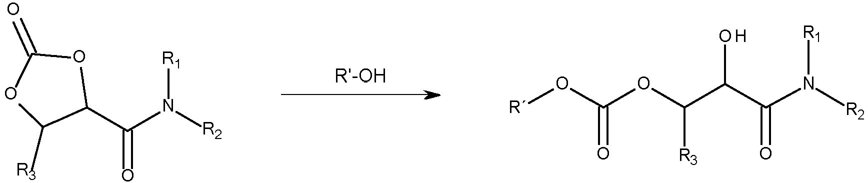

Abmischungen der Verbindungen mit 2 oder mehr 2-Oxo-1,3-dioxolan-4-carbonsäureamid-Einheiten mit einer geeigneten mehrfunktionellen Härterverbindung können als Zwei-Komponentenklebstoff eingesetzt werden mit der 2-Oxo-1,3-dioxolan-4-carbon-säureamidvebindung in einer ersten Komponente und der mehrfunktionellen Härterverbindung in einer zweiten Komponente. Die mehrfunktionelle Härterkomponente weist mindestens zwei funktionelle Gruppen auf, ausgewählt aus der Gruppe bestehend aus primären Aminogruppen, sekundären Aminogruppen und Hydroxygruppen. Vorzugsweise enthält der Zwei-Komponentenklebstoff mindestens einen Katalysator für die Katalysierung der Reaktion der Cyclocarbonatgruppen mit den funktionellen Gruppen des Härters.

Es können auch Mischungen unterschiedlicher Härterverbindungen eingesetzt werden, z.B. eine geringe Menge eines "schnellen" Härters, der Sofortfestigkeit aufbaut, ohne die Topfzeit des Klebers zu sehr zu reduzieren, plus ein langsamer Härter für die endgültige Aushärtung.

Der Zwei-Komponentenklebstoff kann als Lösung in einem organischen Lösemittel oder als lösemittel- und wasserfreies Einhundertprozentsystem appliziert werden.

Vorzugsweise sind die funktionellen Gruppen des Härters ausgewählt aus aliphatischen Hydroxylgruppen, aliphatischen primären Aminogruppen und aliphatischen sekundären Aminogruppen.

Unter einem Zweikomponentenklebstoff versteht man einen Klebstoff, der wenigstens zwei polyfunktionelle Klebstoffbestandteile enthält, die miteinander unter Bindungsbildung reagieren und dabei ein polymeres Netzwerk ausbilden. Dementsprechend enthalten Zweikomponentenklebstoffzusammensetzungen neben wenigstens einer mehrfunktionellen Cyclocarbonatamidverbindung zusätzlich wenigstens eine Verbindung, die wenigstens 2 funktionelle Gruppen F, z.B. 2, 3, 4, 5, 6, 7, 8, 9 oder 10 funktionelle Gruppen F, aufweist, welche vorzugsweise unter aliphatischen Hydroxylgruppen, aliphatischen primären oder sekundären Aminogruppen ausgewählt sind. Diese Verbindungen werden im Folgenden auch als Härter bezeichnet. Vorzugsweise wird die Menge an Härter so gewählt, dass das Molverhältnis von funktionellen 2-Oxo-1,3-dioxolan-Gruppen zu den funktionellen Gruppen F im Härter im Bereich von 1 : 10 bis 10:1, insbesondere im Bereich von 5 : 1 bis 1 : 5 und speziell im Bereich von 1 : 2 bis 2 : 1 liegt.

Der Härter kann eine niedermolekulare Substanz sein, d. h., sein Molekulargewicht liegt unterhalb 500 g/mol, oder eine oligomere oder polymere Substanz, die ein zahlenmittleres Molekulargewicht oberhalb 500 g/mol aufweist.

Für besonders gute Klebewirkungen ist es bevorzugt, dass entweder die Verbindung mit zwei oder mehr 2-Oxo-1,3-dioxolan-4-carbonsäureamid-Einheiten, oder die Härterverbindung, oder beide, mindestens eine flexible Spacergruppe enthält. Eine flexible Spacergruppe ist eine lineare oder verzweigte Verbindungsgruppe, die ein Molekulargewicht von mindestens 200 g/mol aufweist. Die Spacergruppe kann die Gruppe R₂ oder einen Teil der Gruppe R₂ in Formel (I) bilden und/oder die Spacergruppe kann sich zwischen zwei funktionellen Gruppen des Härters befinden. Die Spacergruppe ist vorzugsweise ausgewählt aus Alkylengruppen, Polyethergruppen, Polycarbonatgruppen, Polyestergruppen und Poly(meth)acrylatgruppen.

Spacergruppen sind z.B. lineare oder verzweigte Alkylengruppen mit mindestens 15 C-Atomen; Polyethergruppen der allgemeinen Formel -(A-O)ₘ-, wobei A C2- bis C5-Alkylen bedeutet und m eine Zahl ist, die so gewählt ist, dass das Molekulargewicht von -(A-O)ₘ- mindestens 200 g/mol ist; Polycarbonatgruppen; Polyestergruppen; und Poly(meth)acrylatgruppen. Eine bevorzugte Spacergruppe ist alkoxyliertes Glycerin, z.B. ethoxyliertes Glycerin, propoxyliertes Glycerin und ethoxyliertes/propoxyliertes Glycerin.

Zu den aminischen Härtern, im Folgenden auch Aminhärter, zählen beispielsweise aliphatische und cycloaliphatische Polyamine, aromatische und araliphatische Polyamine sowie polymere Amine, z. B. Aminoplaste und Polyamidoamine. Aminhärter vernetzen Polymere mit 1,3-Dioxolan-2-on-Gruppen, im Folgenden auch Carbonatpolymere genannt, durch Reaktion der primären oder sekundären Aminofunktionen der Polyamine mit den 1,3-Dioxolan-2-on-Gruppen der Carbonatpolymere unter Ausbildung von Urethanfunktionen. Bevorzugte Polyaminhärter weisen im Mittel wenigstens zwei primäre oder sekundäre Aminogruppen pro Molekül, z.B. zwei, drei oder vier primäre oder sekundäre Aminogruppen pro Molekül, auf. Sie können auch zusätzlich ein oder mehrere tertiäre Aminogruppen enthalten. Geeignete Polyamine sind beispielsweise
- aliphatische Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, 2,2-Dimethylpropylendiamin, Trimethylhexamethylendiamin, 1-(3-Aminopropyl)-3-aminopropan, 1,3-Bis-(3-aminopropyl)propan, 4-Ethyl-4-methylamino-1-octylamin und dergleichen;
- cycloaliphatische Diamine wie 1,2-Diaminocyclohexan, 1,2-, 1,3-, 1,4-Bis(aminomethyl)cyclohexan, 1-Methyl-2,4-diaminocyclohexan, N-Cyclohexylpropylen-1,3-diamin, 4-(2-Aminopropan-2-yl)-1-methylcyclohexan-1-amin, Isophorondiamin, 4,4'-Diaminodicyclohexylmethan, 3,3'-Dimethyl-4,4'-diaminodicyclohexylmethan, 3,3',5,5'-Tetramethyl-4,4'-diaminodicyclohexylmethan, 4,8-Diamino-tricyclo[5.2.1.0]-decan, Norbornandiamin, Menthandiamin, Menthendiamin und dergleichen;
- aromatische Diamine wie Toluylendiamin, Xylylendiamin, insbesondere meta-Xylylendiamin (MXDA), Bis(4-aminophenyl)methan (MDA oder Methylendianilin), Bis(4-aminophenyl)sulfon (auch als DADS, DDS oder Dapson bekannt) und dergleichen;
- cyclische Polyamine wie Piperazin, N-Aminoethylpiperazin und dergleichen;
- Polyetheramine, insbesondere difunktionelle und trifunktionelle primäre Polyetheramine auf der Basis von Polypropylenglykol, Polyethylenglykol, Polybutylenoxid, Poly-(1,4-butandiol), Poly-Tetrahydrofuran (Poly-THF) oder Polypentylenoxid, z. B. 4,7,10-Trioxatridecan-1,3-diamin, 4,7,10-Trioxatridecan-1,13-diamin, 1,8-Diamino-3,6-dioxaoctan (XTJ-504, Fa. Huntsman), 1,10-Diamino-4,7-dioxa-decan (XTJ-590, Fa. Huntsman), 1,12-Diamino-4,9-dioxadodecan (Fa. BASF SE), 1,3-Diamino-4,7,10-trioxatridecan (Fa. BASF SE), primäre Polyetheramine auf der Basis von Polypropylenglykol mit einer mittleren Molmasse von 230 wie z.B. Polyetheramine D 230 (Fa. BASF SE) oder Jeffamine^{®} D 230 (Fa. Huntsman), difunktionelle, primäre Polyetheramine auf der Basis von Polypropylenglykol mit einer mittleren Molmasse von 400, z. B. Polyetheramine D 400 (Fa. BASF SE) oder Jeffamine^{®} XTJ 582 (Fa. Huntsman), difunktionelle, primäre Polyetheramine auf Basis von Polypropylenglykol mit einer mittleren Molmasse von 2000 wie z. B. Polyetheramine D2000 (Fa. BASF SE), Jeffamine^{®} D2000 oder Jeffamine^{®} XTJ 578 (jeweils Fa. Huntsman), difunktionelle, primäre Polyetheramine auf der Basis von Propylenoxid mit einer mittleren Molmasse von 4000 wie z. B. Polyetheramin D 4000 (Fa. BASF SE), trifunktionelle, primäre Polyetheramine hergestellt durch Reaktion von Propylenoxid mit Trimethylolpropan, gefolgt durch eine Aminierung der endständigen OH-Gruppen mit einer mittleren Molmasse von 403 wie z.B. Polyetheramine T 403 (Fa. BASF SE) oder Jeffamine^{®} T 403 (Fa. Huntsman), trifunktionelle, primären Polyetheramin, hergestellt durch Reaktion von Propylenoxid mit Glycerin, gefolgt durch eine Aminierung der endständigen OH-Gruppen mit einer mittleren Molmasse von 5000 wie z. B. Polyetheramine T 5000 (Fa. BASF SE) oder Jeffamine^{®} T 5000 (Fa. Huntsman), aliphatische Polyetheramine, die aus einem mit Propylenoxid gepfropften Polyethylenglykol aufgebaut sind und eine mittlere Molmasse von 600 aufweisen, wie z. B. Jeffamine^{®} ED-600 bzw. Jeffamine^{®} XTJ-501 (jeweils Fa. Huntsman), aliphatische Polyetheramine, die aus einem mit Propylenoxid gepfropften Polyethylenglykol aufgebaut sind und eine mittlere Molmasse von 900 aufweisen, wie z. B. Jeffamine^{®} ED-900 (Fa. Huntsman), aliphatische Polyetheramine, die aus einem mit Propylenoxid gepfropften Polyethylenglykol aufgebaut sind und eine mittlere Molmasse von 2000 aufweisen, wie z.B. Jeffamine^{®} ED-2003 (Fa. Huntsman), difunktionelle, primäre Polyetheramin, hergestellt durch Aminierung eines mit Propylenoxid gepfropften Diethylenglykols mit einer mittleren Molmasse von 220 wie z. B. Jeffamine^{®} HK-511 (Fa. Huntsman), aliphatische Polyetheramine auf der Basis eines Copolymers aus Poly(tetramethylenetherglykol) und Polypropylenglykol mit einer mittleren Molmasse von 1000 wie z. B. Jeffamine^{®} XTJ-542 (Fa. Huntsman), aliphatische Polyetheramine auf der Basis eines Copolymers aus Poly(tetramethylenetherglykol) und Polypropylenglykol mit einer mittleren Molmasse von 1900 wie z. B. Jeffamine^{®} XTJ-548 (Fa. Huntsman), aliphatische Polyetheramine auf der Basis eines Copolymers aus Poly(tetramethylenetherglykol) und Polypropylenglykol mit einer mittleren Molmasse von 1400 wie z. B. Jeffamine^{®} XTJ-559 (Fa. Huntsman), Polyethertriamine auf der Basis eines mit Butylenoxid gepfropften mindestens dreiwertigen Alkohols mit einer mittleren Molmasse von 400 wie z. B. Jeffamine^{®} XTJ-566 (Fa. Huntsman), aliphatische Polyetheramine, hergestellt durch Aminierung von mit Butylenoxid aufgepfropften Alkoholen mit einer mittleren Molmasse von 219 wie z. B. Jeffamine^{®} XTJ-568 (Fa. Huntsman), Polyetheramine auf der Basis von Pentaerythrit und Propylenoxid mit einer mittleren Molmasse von 600 wie z. B. Jeffamine^{®} XTJ-616 (Fa. Huntsman), Polyetheramine auf der Basis von Triethylenglykol mit einer mittleren Molmasse von 148, z.B. Jeffamine^{®} EDR-148 (Fa. Huntsman), difunktionelle, primäre Polyetheramine, hergestellt durch Aminierung eines mit Propylenoxid gepfropften Ethylenglykols mit einer mittleren Molmasse von 176 wie z. B. Jeffamine^{®} EDR-176 (Fa. Huntsman) sowie Polyetheramine, hergestellt durch Aminierung von Poly-Tetrahydrofuran (Poly-THF) mit einer mittleren Molmasse von 250, z. B. PolyTHF-Amin 350 (Fa. BASF SE) und Mischungen dieser Amine;
- Polyamidoamine (Amidopolyamine), die durch die Reaktion von dimeren Fettsäuren (z. B. dimere Linolsäure) mit niedermolekularen Polyaminen wie Diethylentriamin, 1-(3-Aminopropyl)-3-aminopropan oder Triethylentetramin oder anderen Diaminen wie den zuvor genannten aliphatischen oder cycloaliphatischen Diaminen erhältlich sind;
- Addukte, die durch Umsetzung von Aminen, insbesondere Diaminen, mit einem Unterschuss an Epoxidharz bzw. Reaktivverdünner erhältlich sind, wobei man vorzugsweise solche Addukte einsetzt, worin etwa 5 bis 20 % der Epoxidgruppen mit Aminen, insbesondere Diaminen, umgesetzt worden sind;
- Phenalkamine, wie aus der Epoxidchemie bekannt;
- Mannichbasen, welche z. B. durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis(aminomethyl)cyclohexan mit Aldehyden, vorzugsweise Formaldehyd und ein- oder mehrwertigen Phenolen mit mindestens einer aldehydreaktiven Kernstelle, z. B. die verschiedenen Kresole und Xylenole, p-tert.-Butylphenol, Resorcin, 4,4'-Dihydroxydiphenylmethan, 4,4'-Dihydroxydiphenyl-2,2-propan, vorzugsweise aber Phenol, hergestellt werden;
sowie Mischungen der vorgenannten Aminhärter, insbesondere Mischungen von difunktionellen Aminen aus der Gruppe der aliphatischen, cycloaliphatischen und aromatischen Amine mit den vorgenannten Polyetheraminen.

Bevorzugte aminische Härter sind aliphatische Polyamine, insbesondere 2,2-Dimethylpropylendiamin, aromatische Diamine, insbesondere m-Xylylendiamin (MXDA) und cycloaliphatische Diamine, insbesondere Isophorondiamin, N-Cyclohexylpropylen-1,3-diamin und 4,4'-Diaminodicyclohexylmethan (Dicykan). Bevorzugt sind auch difunktionelle oder trifunktionelle primäre Polyetheramine auf der Basis von Polypropylenglykol, wie z. B. Jeffamine^{®} D 230 oder Jeffamine^{®} T 403. Besonders bevorzugt sind Polyamine, bei denen eine hohe Beweglichkeit und eine geringe sterische Hinderung rund um die Aminogruppe vorherrschen, z.B. 4,9-Dioxadodecan-1,12-diamin, 4,7,10-Trioxatridecan-1,13-diamin, PolyTHF Amin 350 (BASF SE).

Bevorzugt sind auch Mischungen der als bevorzugt genannten Amine, beispielsweise Mischungen, die 2,2-Dimethylpropylenamin und Isophoronamin enthalten.

Zu den alkoholischen Härtern zählen vor allem niedermolekulare und höhermolekulare aliphatische und cycloaliphatische Alkohole. Alkoholische Härter vernetzen zu Carbonatpolymeren durch Reaktion der primären oder sekundären Alkoholfunktionen mit den 1,3-Dioxolan-2-on-Gruppen unter Ausbildung von Diestern der Kohlensäure. Bevorzugte alkoholische Härter weisen im Mittel wenigstens zwei primäre oder sekundäre Hydroxygruppen pro Molekül, z. B. zwei, drei oder vier primäre oder sekundäre Hydroxygruppen pro Molekül, auf. Geeignete niedermolekulare alkoholische Härter sind z. B. 1,4-Butandiol, Ethylenglykol, Diethylenglykol, Triethylenglykol, Neopentylglykol, 1,3-Propandiol, 1,5-Pentandiol, 1,6-Hexandiol, Glycerin, Diglycerin, Pentaerythrit, Dipentaerythrit, Zuckeralkohole wie Sorbit und Mannit.

Geeignete alkoholische Härter sind auch höhermolekulare, polymere Polyole, beispielsweise Polyesterpolyole, Polycarbonatpolyole, Polyetherpolyole, Polyacrylatpolyole und Polyvinylalkohole. Geeignete polymere Polyolhärter weisen vorzugsweise eine mittlere OH-Funktionalität von wenigstens 1,5 mol und speziell wenigstens 1,8, z. B. im Bereich von 1,5 bis 10 und insbesondere im Bereich von 1,8 bis 4, auf. Unter der mittleren OH-Funktionalität versteht man die mittlere Anzahl OH-Gruppen je Polymerkette. Typische polymere Polyolkomponenten weisen vorzugsweise ein zahlenmittleres Molekulargewicht von etwa 250 bis 50000 g/mol, vorzugsweise von etwa 500 bis 10000 g/mol auf. Vorzugsweise sind wenigstens 50 mol-% der in der polymeren Polyolkomponente enthaltenen Hydroxylgruppen primäre Hydroxylgruppen.

Vorzugsweise handelt es sich bei Polyesterpolyolen um lineare oder verzweigte polymere Verbindungen mit Estergruppen im Polymerrückgrat, die an den Enden der Polymerkette freie Hydroxylgruppen aufweisen. Vorzugsweise handelt es sich hierbei um Polyester, die durch Polykondensation von zweiwertigen Alkoholen mit zweiwertigen Carbonsäuren, gegebenenfalls in Gegenwart höherwertiger Alkohole (z.B. 3, 4, 5 oder 6-wertiger Alkohole) und/oder höherwertiger Polycarbonsäuren, erhalten werden. Anstelle der freien Di- bzw. Polycarbonsäuren können auch die entsprechenden Di- bzw. Polycarbonsäureanhydride oder entsprechende Di- bzw. Polycarbonsäureester von niederen Alkoholen oder deren Gemische zur Herstellung der Polyesterpolyole verwendet werden. Die Di- bzw. Polycarbonsäuren können aliphatisch, cycloaliphatisch, araliphatisch, aromatisch oder heterocyclisch sein, weisen vorzugsweise 2 bis 50 und insbesondere 4 bis 20 C-Atome auf und können gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure und dimere Fettsäuren. Für die Herstellung der Polyesterpolyole kommen als Diole insbesondere aliphatische und cycloaliphatische Diole mit vorzugsweise 2 bis 40 und insbesondere 2 bis 20 C-Atomen in Betracht, z. B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole. Bevorzugt sind Alkohole der allgemeinen Formel HO-(CH₂)ₓ-OH, wobei x eine Zahl von 2 bis 20, bevorzugt eine gerade Zahl von 2 bis 12 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentan-1,5-diol.

Geeignet als alkoholische Härter sind auch Polyesterpolyole auf Lacton-Basis, wobei es sich um Homo- oder Mischpolymerisate von Lactonen, bevorzugt um endständige Hydroxylgruppen-aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Startermoleküle sind z. B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren eingesetzt werden.

Beispiele für geeignete Polyesterpolyole sind z. B. die aus Ullmanns Enzyklopädie der Technischen Chemie, 4. Auflage, Band 19, Seiten 62 bis 65 bekannten Polyesterpolyole.

Ferner kommen auch Polycarbonatpolyole, wie sie z. B. durch Umsetzung von Phosgen mit einem Überschuss von den als Aufbaukomponenten für die Polyesterpolyole genannten niedermolekularen Alkohole erhalten werden können, in Betracht.

Bei den Polyetherpolyolen handelt es sich insbesondere um Polyetherpolyole, die durch Polymerisation von Ethylenoxid, Propylenoxid, Butylenoxid, Tetrahydrofuran, Styroloxid oder Epichlorhydrin mit sich selbst, z. B. in Gegenwart von BF₃ oder durch Anlagerung dieser Verbindungen gegebenenfalls im Gemisch oder nacheinander, an bi- oder polyfunktionelle Startkomponenten mit reaktionsfähigen Wasserstoffatomen, wie Polyole oder polyfunktionelle Amine, z. B. Wasser, Ethylenglykol, Propan-1,2-diol, Propan-1,3-diol, 1,1-Bis-(4-hydroxyphenyl)propan, Trimethylolpropan, Glycerin, Sorbit, Ethanolamin oder Ethylendiamin, hergestellt werden können. Auch Succrosepolyether (siehe DE 1176358 und DE 1064938) sowie auf Formit oder Formose gestartete Polyether (siehe DE 2639083 und DE 2737951) kommen in Frage.

Geeignet sind ebenfalls Polyhydroxyolefine, bevorzugt solche mit 2 endständigen Hydroxylgruppen, z. B. α-ω-Dihydroxypolybutadien.

Geeignet sind ebenfalls Polyhydroxypolyacrylate, wobei die Hydroxylgruppen seitenständig oder endständig angeordnet sein können. Beispiel hierfür sind α,ω-Dihydroxypoly(meth)acrylester, die durch Homo- oder Copolymerisation von Alkylestern der Acrylsäure und/oder der Methacrylsäure in Gegenwart von OH-Gruppen-enthaltenden Reglern wie Mercaptoethanol oder Mercaptopropanol und anschließende Umesterung mit einem niedermolekularen Polyol, beispielsweise einem Alkylenglykol wie Butandiol, erhältlich sind. Solche Polymere sind beispielsweise aus der EP-A 622 378 bekannt. Beispiel hierfür sind weiterhin Polymere, die durch Copolymerisation von Alkylestern der Acrylsäure und/oder der Methacrylsäure mit Hydroxyalkylestern ethylenisch ungesättigter Carbonsäure wie Hydroxyethylacrylat, Hydroxypropylacrylat, Hydroxybutylacrylat, Hydroxyethylmethacrylat, Hydroxypropylmethacrylat oder Hydroxybutylmethacrylat erhältlich sind.

Geeignet sind auch Polyvinylalkohole, die vorzugsweise durch vollständige oder teilweise Verseifung von Polyvinylestern, insbesondere Polyvinylacetat, erhalten werden können. Sofern die Polyvinylester, bevorzugt Polyvinylacetat, teilverseift vorliegen, liegen bevorzugt höchstens 50 bis 95 % der Estergruppen verseift als Hydroxylgruppen vor. Sofern die Polyvinylester, bevorzugt Polyvinylacetat, vollständig verseift vorliegen, liegen im Allgemeinen mehr als 95 % bis zu 100 % der Estergruppen verseift als Hydroxylgruppen vor.

Unter den höhermolekularen, polymeren Polyolen bevorzugte alkoholische Härter sind insbesondere Polyacrylatpolyole, diese sind beispielsweise unter dem Markennamen Joncryl^{®} der Fa. BASF SE erhältlich, z. B. Joncryl^{®} 945.

Geeignete Härter sind auch Aminosäuren, z. B. Lysin, Arginin, Glutamin und Asparagin und deren Stereoisomere und deren Mischungen.

Es können natürlich auch Mischungen unterschiedlicher Härter eingesetzt werden, z.B. Mischungen eines oder mehrerer aminischer Härter mit einem oder mehreren alkoholischen Härtern, Mischungen eines oder mehrerer aminischer Härter mit einer oder mehreren Aminosäuren oder Mischungen eines oder mehrerer alkoholischer Härter mit einer oder mehreren Aminosäuren.

In den erfindungsgemäßen Klebstoffzusammensetzungen beträgt die Gesamtmenge an Härtern vorzugsweise 0,1 Gew.-% bis 50 Gew.-%, häufig 0,5 bis 40 Gew.-% und insbesondere 1 bis 30 Gew.-%, bezogen auf die Gesamtmenge an Cyclocarbonatverbindungen plus eingesetzten Härtern.

Die Härtung der Klebstoffzusammensetzung kann thermisch durch Erwärmen des Gemischs aus erfindungsgemäßem Polymer und Härter auf eine Temperatur oberhalb der Mischtemperatur erfolgen. Die Härtung kann auch bei niedrigeren Temperaturen erfolgen. Typischerweise erfolgt die Härtung der erfindungsgemäßen Klebstoffzusammensetzungen bei Temperaturen im Bereich von -10°C bis 150 °C, vorzugsweise im Bereich von 0 bis 100 °C und insbesondere im Bereich von 10 bis 70 °C. Besonders vorteilhaft ist die Härtung bei Temperaturen von 20-30°C. Welche Temperatur geeignet ist, hängt von den jeweiligen Härtern und der gewünschten Härtungsgeschwindigkeit ab und kann im Einzelfall vom Fachmann beispielsweise anhand einfacher Vorversuche ermittelt werden. Im unteren Temperaturbereich (5 bis ca. 35 C), der ja der meist vorherrschenden Umgebungstemperatur entspricht, reicht es selbstverständlich aus, erfindungsgemäßes Polymer und Härter zu mischen. Alternativ erfolgt die Härtung vorzugsweise mikrowelleninduziert.

Die Zweikomponentenklebstoffzusammensetzungen können auch einen oder mehrere geeignete Katalysatoren für die Aushärtung enthalten, die sich in bekannter Weise nach der Art der reaktiven funktionellen Gruppen F richten. Die Katalysatoren werden, sofern erwünscht, in Anteilen von 0,01 Gew.-% bis etwa 10 Gew.-%, bezogen auf das Gesamtgewicht der erfindungsgemäßen Polymere mit funktionellen Alkyliden-1,3-dioxolan-2-on-Gruppen der Formel I und des Härters, eingesetzt. In einer Ausgestaltung werden keine Katalysatoren benötigt, insbesondere bei Härtern, die als funktionelle Gruppen Aminogruppen aufweisen, d.h., der Gehalt an Katalysatoren in der Zusammensetzung beträgt dann weniger als 0,01 Gew.-%. Katalysatoren werden bevorzugt dann eingesetzt, wenn der Härter reaktive Gruppen F aufweist, die von Aminogruppen verschieden sind, insbesondere wenn der Härter Hydroxylgruppen aufweist.

Bevorzugt eingesetzte Katalysatoren sind basische Katalysatoren, besonders bevorzugt organische Amine und organische Phosphine. Unter den organischen Aminen sind Amidinbasen, wie beispielsweise 1,8-Diazabicyclo[5.4.0]undec-7-en (DBU) und 1,5-Diazabicyclo[4.3.0]non-5-en (DBN), Mono-C₁-C₆-alkyl-, Di-C₁-C₆-alkyl- und Tri-C₁-C₆-alkylamine, insbesondere Triethylamin und tert.-Butylamin, bevorzugt. Unter den organischen Phosphinen sind Trialkylphosphine und Triarylphosphine bevorzugt, beispielsweise Tri-n-butylphosphin und Triphenylphosphin. Die Katalysatoren können selbstverständlich auch als Mischungen eingesetzt werden, gegebenenfalls in Kombination mit Tri-C₁-C₆-alkylammoniumhalogeniden und Kupfersalzen, zum Beispiel Triphenylphosphin in Kombination mit einem Tri-C₁-C₆-alkylammoniumhalogenid und einem Kupfersalz, z. B. Kupfer(I)-chlorid, Kupfer(I)-bromid, Kupfer(II)-chlorid oder Kupfer(II)-sulfat.

Neben den vorgenannten Bestandteilen kann die Klebstoffzusammensetzung die hierfür üblichen Additive enthalten. Die Wahl geeigneter herkömmlicher Additive für die erfindungsgemäße Zusammensetzung hängt vom jeweiligen Verwendungszweck ab und kann im Einzelfall vom Fachmann bestimmt werden.

Geeignete Additive umfassen beispielsweise Antioxidantien, UV-Absorber/Lichtstabilisatoren, Metalldeaktivatoren, Antistatika, Verstärkungsstoffe, Füllstoffe, Antifoggingmittel, Biozide, Weichmacher, Gleitmittel, Emulgatoren, Farbmittel, Pigmente, Rheologiemittel, Adhäsionsregulatoren, optische Aufheller, Flammschutzmittel, Antitropfmittel, Nukleierungsmittel, Netzmittel, Verdicker, Schutzkolloide, Entschäumer, Tackifier, Lösungsmittel und Reaktivverdünner sowie Gemische davon.

Die gegebenenfalls verwendeten Lichtstabilisatoren/UV-Absorber, Antioxidantien und Metalldeaktivatoren weisen vorzugsweise eine hohe Migrationsstabilität und Temperaturbeständigkeit auf. Sie sind beispielsweise aus den Gruppen a) bis t) ausgewählt. Die Verbindungen der Gruppen a) bis g) und i) stellen Lichtstabilisatoren/ UV-Absorber dar, während Verbindungen j) bis t) als Stabilisatoren wirken.
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen,
s) Polyamidstabilisatoren und
t) basische Costabilisatoren.

Der Zweikomponenten-Klebstoff ist vorzugsweise frei von Isocyanaten, d.h. er enthält vorzugsweise keine Isocyanatverbindungen als Härter. Der Zweikomponenten-Klebstoff liegt vorzugsweise entweder in Form einer Lösung in einem organischen Lösungsmittel vor oder es ist lösemittelfrei. Lösemittelfrei bedeutet, dass weniger als 5 Gew.%, besonders bevorzugt weniger als 2 Gew.% oder kein organisches Lösungsmittel oder Wasser enthalten ist.

Der erfindungsgemäße Zweikomponenten-Klebstoff ist in der Lage, in kurzer Zeit und insbesondere mit Aminhärtern bereits bei Raumtemperatur hohe Bindekräfte aufzubauen.

Gegenstand der Erfindung ist auch ein Zweikomponenten-Klebstoff enthaltend als reaktive erste Komponente die oben näher beschriebene mindestens eine Verbindung mit n 2-Oxo-1,3-dioxolan-4-carbonsäureamid-Einheiten; und
als zweite Komponente (Härter) die oben näher beschriebene mindestens eine Verbindung ausgewählt aus Polyaminen und Polyolen;
wobei n ein Zahl größer oder gleich 2 ist;
die Polyamine zwei oder mehr Amingruppen aufweisen; und
die Polyole zwei oder mehr alkoholische Hydroxygruppen aufweisen.

Der Zweikomponenten-Klebstoff hat nach Vermischen der Komponenten eine Brookfieldviskosität bei Temperaturen von 70°C oder darunter, vorzugsweise bei Temperaturen von 40 °C oder darunter, besonders bevorzugt bei Temperaturen von 23°C oder darunter, von vorzugsweise kleiner 10 000 mPa s (Brookfield-LVT, gemessen bei 12 U/min mit Spindel 3).

Der Zweikomponenten-Klebstoff hat eine Klebkraft von vorzugsweise grösser als 1,5 N/15 mm, gemessen als Schälfestigkeit von zwei miteinander mit einer Klebstoffschicht von 3 µm und mit einem Anpressdruck von 3 bar verklebten Polyesterfolien nach 24 Stunden.

Gegenstand der Erfindung ist auch ein Klebeverfahren, wobei zwei Substrate miteinander verklebt werden und auf die Oberfläche mindestens eines der Substrate ein 2-Komponentenklebstoff aufgetragen wird, welcher mindestens eine der oben näher beschriebenen Verbindungen mit n 2-Oxo-1,3-dioxolan-4-carbonsäureamid-Einheiten als reaktive Komponente enthält und n eine Zahl größer oder gleich 2 ist.

Bevorzugte Anwendungen und bevorzugte Klebeverfahren sind die Verbundfolienkaschierung, die Glanzfolienkaschierung und die Kaschierung von Formkörpern, wie sie insbesondere bei der Möbelkaschierung oder bei der Kaschierung von Automobilinnenteilen eingesetzt wird.

Gegenstand der Erfindung ist auch ein Kaschierverfahren zur Herstellung von kaschierten Gegenständen, ausgewählt aus Glanzfolien, Verbundfolien und kaschierten Formkörpern, wobei man
a) ein erstes Substrat in Form einer ersten Folie zur Verfügung stellt,
b) ein zweites Substrat zur Verfügung stellt, ausgewählt aus Papier, einer zweiten Folie und Formkörpern,
c) einen oben näher beschriebenen erfindungsgemäßen Zweikomponentenklebstoff zur Verfügung stellt und
d) den Zweikomponentenklebstoff auf das erste Substrat und/oder auf das zweite Substrat aufträgt, optional trocknen lässt und das erste Substrat auf den das zweite Substrat aufkaschiert, wobei die Aufkaschierung unter Thermoaktivierung erfolgen kann.

Die erste Folie ist vorzugsweise ausgewählt aus Kunststofffolien und Aluminiumfolien, wobei die Kunststofffolien auch metallisiert sein können.

Das Aufkaschieren erfolgt vorzugsweise unter Druck und/oder Temperaturerhöhung, insbesondere durch Thermoaktivierung.

Wenigstens eines der Substrate kann auf der mit dem Klebstoff beschichteten Seite bedruckt oder metallisiert sein.

Gegenstand der Erfindung sind auch folienkaschierte Gegenstände, hergestellt nach dem erfindungsgemäßen Kaschierverfahren, wobei das Folienmaterial vorzugsweise ausgewählt ist aus der Gruppe bestehend aus Polyvinylchlorid, das auch Weichmacher enthalten kann, und thermoplastischem Polyolefin (TPO) und Kombinationen daraus.

Die benutzten Folien sind vielfach Kunststoffdekorfolien und können eine Oberflächenstruktur aufweisen. Diese Oberflächenstruktur auf der Kunststofffolie kann beispielsweise vor, während oder nach dem Verkleben eingeprägt werden.

Eine Oberflächenbehandlung der Foliensubstrate ist vor der Beschichtung mit dem Zweikomponentenklebstoff nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Coronabehandlung zur Verstärkung der Haftwirkung. Vorzugsweise weist die Polymerfolie an der mit dem Klebstoff in Kontakt kommenden Oberfläche hydrophile Gruppen auf. Hydrophile Gruppen sind z.B. Sauerstoff enthaltende Gruppen beispielsweise OH-Gruppen oder Säuregruppen. Die hydrophilen Gruppen werden vorzugsweise erzeugt durch Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung und/oder Formkörpersubstrat verwendet werden.

Außerdem können die Folien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Die Kaschierung von Formkörpern betrifft die Herstellung von Verbundkörpern durch dauerhafte Verklebung von großflächigen, biegsamen Folien auf festen (dreidimensional geformten, formstabilen, nicht flexiblen) Formkörpern als Substrat. Die biegsamen Folien sind insbesondere ausgewählt aus Polymerfolien und Metallfolien. Sie werden mit den festen Formkörpern, z.B. Formteilen aus Metall, lackiertem Metall, Holz, Holzwerkstoffen, Fasermaterialien oder Kunststoff verklebt. Bei den Formteilen kann es sich um Möbel oder um Möbelteile, d.h. um Bestandteile von Möbeln oder um Automobilinnenteile handeln.

In einer Ausführungsform handelt es sich bei den kaschierten Formkörpern um folienbeschichtete Möbel. Bei den erfindungsgemäß hergestellten folienbeschichteten Möbeln handelt es sich um Verbundkörper. Die Verbundkörper können zwischen Folie und Klebstoffschicht und/oder zwischen Substrat und Klebstoffschicht zusätzlich Primerschichten zur Haftverbesserung aufweisen. Die zu verklebenden Folien und Substrate können mit Haftvermittlern vorbehandelt sein. Aufgrund der bereits guten Hafteigenschaften erfindungsgemäßer Klebstoffe ist die Anwendung von Primern aber nicht unbedingt erforderlich. Bei den Möbelteilen kann es sich auch um Formteile handeln, welche aus synthetischen oder natürlichen Fasern oder Spänen aufgebaut sind, die durch ein Bindemittel zu einem Formteil gebunden sind. Die Formteile können eine beliebige Form haben. Besonders bevorzugt sind MDF-Platten (mitteldichte Holzfaserplatten).

Bei der Herstellung von folienkaschierten Formteilen für den Automobilbau erfolgt die Kaschierung auf ein für den Einbau in ein Automobil vorgesehenes Formteil. Bei den Formteilen kann es sich auch um Formteile handeln, welche aus synthetischen oder natürlichen Fasern oder Spänen aufgebaut sind, die durch ein Bindemittel zu einem Formteil gebunden sind; insbesondere sind auch Formteile aus Kunststoff, z.B. ABS, geeignet. Die Formteile können eine beliebige Form haben.

Als erstes Substrat besonders bevorzugte Folien sind Polymerfolien. Als Polymerfolie werden insbesondere biegsame flächige Kunststoffe in einer Dicke von 0.05 Millimeter bis 5 Millimeter, vorzugsweise von 0,25 bis 1 mm verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Kunststofffolien werden üblicherweise durch Streichen, Gießen, Extrusion oder besonders bevorzugt durch Kalandrieren hergestellt und sind typischerweise in Rollen kommerziell erhältlich oder werden vor Ort hergestellt. Sie können einschichtig oder mehrschichtig aufgebaut sein. Der Kunststoff der Polymerfolien ist vorzugsweise ein thermoplastischer Kunststoff, z.B. Polyester, wie Polyethylenterephthalat (PET), thermoplastische Polyolefine (TPO) wie Polyethylen, orientiertem Polypropylen (OPP), ungerecktes Polypropylen (CPP), Polyvinylchlorid, insbesondere Weich-PVC, Polyacetate, Ethylen/Vinylacetat Copolymere (EVA), ASA (Acrylnitril/Styrol/Acrylsäureester Copolymere), PUR (Polyurethan), PA (Polyamid), Poly(meth)acrylate, Polycarbonate, oder deren Kunststofflegierungen, Zellophan, mit Metall, z. B. Aluminium, beschichtete (bedampfte) Polymerfolien (kurz : metallisierte Folien) oder Metallfolien, z.B. aus Aluminium. Die genannten Folien können beispielsweise auch mit Druckfarben bedruckt sein. Besonders bevorzugt sind Hart-PVC und thermoplastisches Polyethylenterephthalat (PET).

Die Beschichtung der Folien und Substrate mit dem Klebstoff kann nach üblichen Auftragsverfahren erfolgen, beispielsweise durch ein Sprüh-, Streich-, Rakel-, Stempel- , Walz- oder Gießauftragsverfahren. Bevorzugt ist ein Sprühauftrag.

Die aufgebrachte Klebstoffmenge beträgt vorzugsweise 0,5 bis 100 g/m², besonders bevorzugt 2 bis 80 g/m², ganz besonders bevorzugt 10 bis 70 g/m², bezogen auf Klebstoff. Vorzugsweise wird nur die Folie oder nur das Substrat einseitig beschichtet. Es kommt jedoch auch eine Beschichtung von beiden zu verklebenden Einheiten, d.h. von Folie und Substrat in Betracht. Nach der Beschichtung erfolgt üblicherweise eine Trocknung, vorzugsweise bei Raumtemperatur oder bei Temperaturen bis zu 80 °C, um Wasser oder sonstige Lösemittel zu entfernen.

Der Klebstoff kann thermisch aktiviert werden. Die Temperatur in der Klebstoffschicht beträgt vorzugsweise mindestens 30°C oder mindestens 40 °C, z.B. von 30 bis 200 °C, oder von 40 bis 180°C. Ein besonderer Vorteil der Erfindung liegt in einer guten Aktivierbarkeit des Klebstoffs auch bei Temperaturen unterhalb des mit herkömmlichen Klebstoffen verwendeten Temperaturbereiches von 60-70°C, z.B. bei Temperaturen von weniger als 60°C, z.B. maximal 58°C, maximal 55 °C oder maximal 50 °C.

Die Verklebung erfolgt vorzugsweise unter Druck. Dazu können z.B. die zu verklebenden Teile mit einem Druck von mindestens 0,005 oder mindestens 0,01 oder mindestens 0,08 N/mm², z.B. 0,005 bis 5 N/mm² oder 0,01 bis 0,8 N/mm² zusammengepresst werden. Der Anpressdruck kann z.B. durch das Anlegen eines Unterdruckes zwischen Folie und Substrat und/oder durch Luftdruck erzeugt werden.

Besondere Bedeutung hat das erfindungsgemäße Verfahren auch für die Herstellung von Einbauteilen für Fahrzeuge. Besonders bevorzugt ist die Verwendung des erfindungsgemäßen Klebstoffs für die Herstellung von Innenauskleidungsteilen für Automobile. Beispiele für derartige Innenauskleidungsteile sind Türinnenverkleidungen, Schalttafeln, Armaturenbretter, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen. Hierfür wird insbesondere ein Vakuumtiefziehverfahren oder eine Presskaschierung im Siegelverfahren verwendet. Beim Vakuumtiefziehverfahren wird der Klebstoff auf den Formkörper aufgetragen. Anschließend erfolgt gegebenenfalls ein Ablüften, z.B. bei Raumtemperatur oder im Trockenkanal bei vorzugsweise maximal 40°C. Typischerweise wird die aufzuklebende Folie, z.B. eine Dekorfolie aus luftundurchlässigem Material, in einem Rahmen luftdicht eingespannt. Unterhalb der Folie befindet sich eine Unterform auf die der Formkörper gelegt wird. Unterform und Formkörper sind durchbohrt beziehungsweise luftdurchlässig. Das Gerät ist unterwärts weiter luftdicht abgeschlossen. Beim Absaugen der Luft aus dieser Vorrichtung schmiegt sich nun die Folie unter dem auf seine Oberfläche lastenden atmosphärischen Druck passgenau auf den Formkörper. Die Folie wird vor dem Anlegen des Vakuums, bzw. Unterdruckes, erhitzt. Die Folie ist wegen des zu erzeugenden Vakuums, bzw. Unterdruckes, luftundurchlässig. Beim Presskaschierungsverfahren wird der Klebstoff ebenfalls auf dem Formkörper und gegebenenfalls auf der zur verklebenden Folie aufgetragen, zumindest jedoch auf dem Formkörper. Anschließend erfolgt gegebenenfalls ein Ablüften, typischerweise bei Raumtemperatur oder im Trockenkanal bei vorzugsweise maximal 40°C. Die Verklebung von Formkörpern mit der Folie kann nach Wärmeaktivierung unter Fügen und Pressen erfolgen. Die hier benutzten Folien sind vielfach Kunststoffdekorfolien und weisen eine Oberflächenstruktur auf. Diese Oberflächenstruktur auf der Kunststofffolie kann beispielsweise vor, während oder nach dem Verkleben eingeprägt werden.

Bei dem erfindungsgemäßen Kaschierverfahren zur Herstellung von Verbundfolien wird der oben beschriebene Zweikomponentenklebstoff oder eine entsprechend konfektionierte Zubereitung auf die zu verklebenden Substrate vorzugsweise mit einer Schichtdicke von 0,1 bis 20 g/m², besonders bevorzugt 1 bis 7 g/m² z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach optionaler, kurzer Zeit zur Ablüftung flüchtiger Bestandteile (vorzugsweise nach 1 bis 60 Sekunden) kann das beschichtete Foliensubstrat dann mit einem zweiten Foliensubstrat kaschiert werden, wobei die Temperatur z.B. 20 bis 200 °C, vorzugsweise 20 bis 100 °C und der Druck z. B. 100 bis 3000 kN/m², vorzugsweise 300 bis 2000 kN/m² betragen kann. Als Substrate für die Verbundfolienkaschierung eignen sich besonders z.B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z.B. Aluminium, beschichtete (bedampfte) Polymerfolien (kurz : metallisierte Folien) oder Metallfolien, z.B. aus Aluminium. Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Eine Ausführungsform der Erfindung ist eine Verbundfolie erhältlich nach dem oben genannten Kaschierverfahren, d.h. hergestellt unter Verwendung einer der oben beschriebenen Zweikomponentenklebstoffe. Das Material einer ersten Folie ist vorzugsweise ausgewählt aus OPP, CPP, PE, PET und PA und wobei das Material einer zweiten Folie vorzugsweise ausgewählt ist aus OPP, CPP, PE, PET, PA und Metallfolie. In einer Ausführungsform der Erfindung ist die erste Folie und/oder die zweite Folie auf der jeweiligen Seite, welche mit dem Klebstoff beschichtet wird, bedruckt oder metallisiert. Die Dicke der Substratfolien kann beispielsweise von 5 bis 100 µm, vorzugsweise von 5 bis 40 µm betragen. Bei bevorzugten Verbundfolien ist das Folienmaterial ausgewählt aus der Gruppe bestehend aus Aluminiumfolie, bedruckte Polyesterfolie, unbedruckte Polyesterfolie, bedruckte Polyamidfolie, unbedruckte Polyamidfolie, Polypropylenfolie, Polyethylenfolie und Kombinationen daraus.

Bei der Glanzfolienkaschierung wird ein erstes Substrat mit einem zweiten Substrat laminiert, wobei es sich bei dem ersten Substrat um eine Polymerfolie, vorzugsweise um eine transparente Polymerfolie handelt, und es sich bei dem zweiten Substrat um Papier, Karton oder Pappe handelt, wobei das zweite Substrat vorzugsweise bedruckt ist und wobei die Laminierung vorzugsweise unter Druck und Erwärmen erfolgt. Die Kaschierung erfolgt analog zur Herstellung der Verbundfolien. Vorzugsweise wird das Glanzfolienlaminat hergestellt unter Verwendung des oben beschriebenen Zweikomponentenklebstoffs, wobei das Material einer transparenten Polymerfolie (erstes Substrat) ausgewählt ist aus orientiertem Polypropylen (OPP), ungerecktem Polypropylen (CPP), Polyethylen (PE), Polyamid (PA), Polyethylenterephthalat (PET), Polyacetat und Zellophan und wobei das Material des zweiten Substrats ausgewählt ist aus Papier, Karton und Pappe. Vorzugsweise wird als Polymerfolie für die Glanzfolienkaschierung eine coronabehandelte oPP-Folie verwendet. In einer Ausführungsform der Erfindung ist das zweite Substrat de Glanzfolie auf der Seite, welche mit Klebstoff beschichtet wird, farbig oder bedruckt. Die Dicke der Polymerfolie kann beispielsweise von 5 bis 100 µm, vorzugsweise von 5 bis 40 µm betragen.

Die vorliegende Erfindung wird nun anhand der nachfolgenden Beispiele näher erläutert.

### Beispiele

### Beispiel 1: Verbindung mit drei 2-Oxo-1,3-dioxolan-4-carboxamidgruppen auf Basis von ethoxyliertem/propoxyliertem Glycerin

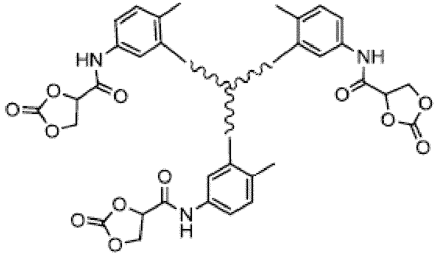

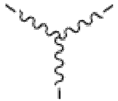

= Glycerin plus EO/PO
M_{eq} = 1870 g/mol (Molekulargewicht pro Cyclocarbonatgruppe)

Unter Stickstoffatmosphäre werden 13.94 g Toluol-2,4-diisocyanate (TDI) (0.0825 mol) und 10.56 g 2-Oxo-[1,3]-dioxolane-4-carbonsäure (0.08 mol) in 70 ml trockenem THF oder Aceton gelöst. Es werden 0.12 g (1 mol%) 1,8-Diazabicyclo[5. 4.0]-undec-7-en (DBU) zugegeben und die Reaktionsmischung wird 12 h bei Raumtemperatur gerührt. Nach Abdampfen des Lösungsmittel wird das Produkt als weißer Feststoff in quantitativer Ausbeute erhalten.

Die Reaktion kann auch in trockenem Acetonitril und mi 4-DMAP als Katalysator erfolgen.

In Gegenwart von DBTL (Dibutylzinndilaurat, 0.02 Gew.-%) kann das erhaltene Produkt mit Lupranol^{®} 2095(trifunktionelles Polyetherpolyol mit primären Hydroxylendgruppen) umgesetzt werden zu einem difunktionellen Prepolymer. Hierzu werden 5.0 g (0.0195 mol) des Produktes in trockenem THF gelöst und es werden 31.2 g Lupranol^{®} 2095 (6.52 mmol) und 1.2 mg DBTL (0.002 mmol) zugegeben. Die Reaktionsmischung wird für 4 h auf 60 °C erwärmt. Nach Abdampfen des Lösungsmittel wird das Produkt als viskoses gelbes Öl erhalten.

### Beispiel 2

### Verbindung mit drei 2-Oxo-1,3-dioxolan-4-carboxamidgruppen, hergestellt aus Glycerincarbonatcarbonsäure (2-Oxo-1,3-dioxolan-4-carbonsäure) und Isocyanuratmodifiziertem Hexamethylendiisocyanat (Basonat^{®} HI 100)

### Basonat HI 100:

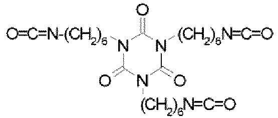

31,79 g Cyclocarbonatcarbonsäure (0,12 mol) in 80 ml THF wurden vorgelegt und ergab eine gelbe Lösung. 0,3704 g DMAP (4-(Dimethylamino)-pyridin, 0,0012 mol) in 60 ml THF wurden zugegeben. Danach wurden 46,09 g Basonat^{®} HI100 (0,12 mol bezogen auf NCO; die NCO-Zahl von Basonat^{®} HI 100 entspricht 21,9%) in 80ml THF zugegben. Diese Lösung wird ca. 24 h bei Raumtemperatur gerührt. Die Lösung wird über Nacht trüb. Nach Abdampfen des THF einrotiert blieben 73,76 g gelbe, hochviskose Flüssigkeit zurück. Im IR-Spektrum war kein NCO Peak zu sehen, und die NCO Zahl entsprach 1,1%.

### Beispiel 3: Zweikomponenten-Klebstoffe

Das 2-Oxo-1,3-dioxolan-4-carboxamid des Beispiels 1 bzw. des Beispiels 2 wurden bei 23°C in THF gelöst und mit unterschiedlichen aminischen Härtern abgemischt (siehe Tabelle 1).

Der resultierende reaktive zweikomponentige Klebstoff wurde unmittelbar nach dem Mischen in einer Schichtdicke von 3 µm auf eine bedruckte 36 µm starke Polyesterfolie aufgetragen. Das Lösungsmittel wurde mittels eines Heißluftstroms verdampft und dann wurde in einem Kalander eine zweite 36 µm starke Polyesterfolie, die zuvor mit einer Korona-Behandlung versehen worden war, unter einem Druck von 3 bar auf die Klebstoffschicht kaschiert. Das resultierende Laminat wurde in 15 mm breite Streifen geschnitten und von diesen Streifen wurde nach 24 h die Schälfestigkeit bei Raumtemperatur (20 °C) ermittelt [N/15 mm]. Dazu bediente man sich einer Reißmaschine und führte die Schälfestigkeitsprüfung unter einem Reißwinkel von 90 ° durch (T-Test). Die Ergebnisse sind in Tabelle 1 wiedergegeben.

### Aminische Härter:

| | |
|---|---|
| DODDA: | 4,9-Dioxadodecan-1,12-diamin |
| | H₂NCH₂CH₂CH₂OCH₂CH₂CH₂CH₂OCH₂CH₂CH₂NH₂ |
| DATOTD: | 1,13-Diamino-4,7,10-trioxatridecan |
| | H₂NCH₂CH₂CH₂OCH₂CH₂OCH₂CH₂OCH₂CH₂CH₂NH₂ |
| DAP: | 1,3-Diaminopropan, H₂NCH₂CH₂CH₂NH₂ |

**Tabelle 1: Klebstoffzusammensetzungen und Ergebnisse der Schälfestigkeitsmessungen**

| Beispiel | 2-Oxo-1,3-dioxolan-4-carboxamide | Aminischer Härter | Schälfestigkeit 24h [N/15 mm] |
|---|---|---|---|
| 3.1 | 1872 g Beispiel 1 | 102 g DODDA | 3,1 |
| 3.2 | 1872 g Beispiel 1 | 110 g DATOTD | 4,5 |
| 3.3 | 1872 g Beispiel 1 | 37 g DAP | 3,3 |
| 3.4 | 280 g Beispiel 2 | 240 g Polyetheramin D 400 | 3,4 |
| 3.5 | 280 g Beispiel 2 | 37 g DAP | 0,3 |
| 3.6 Vergleich | 40 g Liofol^{®} UR7732 | 60 g Liofol^{®} UR 6084 | 3,6 |

| | | | |
|---|---|---|---|
| Liofol^{®} UR7732 / Liofol^{®} UR 6084:Zweikomponenten- Polyurethanlaminierklebstoff aus isocyanatbasiertem Bindemittel (Liofol^{®} UR7732) und Polyol-Härter (Liofol^{®} UR 6084) | | | |

Eine Schälfestigkeit von grösser 1,5 N nach 24 h ist für Anwendungen des Klebstoffs in flexiblen Verpackungen und für Verbundfolienkaschierungen besonders gut geeignet , um industriell verwertbar zu sein.

## Patentansprüche

1. Verwendung von Verbindungen mit n 2-Oxo-1,3-dioxolan-4-carbonsäureamid-Einheiten als reaktive Komponente in 2-Komponentenklebstoffen, wobei n eine Zahl größer oder gleich 2 ist, vorzugsweise zur Herstellung von Hydroxypolyurethanen oder Hydroxypolycarbonaten für Klebstoffanwendungen.

2. Verwendung nach Anspruch 1, **dadurch gekennzeichnet dass** die Verbindungen mit zwei oder mehr 2-Oxo-1,3-dioxolan-4-carbonsäureamideinheiten die Formel (I) aufweisen 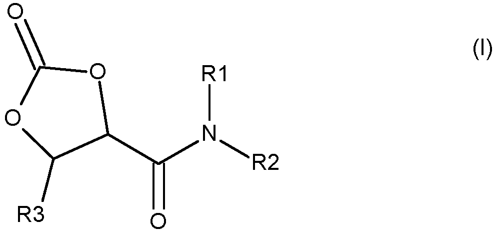 wobei
R₁ und R₃ unabhängig voneinander aus H und einem organischen Rest ausgewählt sind; und
R₂ ein n-wertiger organischer Rest ist, der mit n-1 weiteren 2-Oxo-1,3-dioxolan-4-carbonsäureamidgruppen substituiert ist und n eine Zahl größer oder gleich 2 ist.

3. Verwendung nach Anspruch 2, **dadurch gekennzeichnet dass** in Formel (I) R₁ aus H, geradkettigen, verzweigten oder cyclischen C₁₋₁₂-Alkylgruppen, C₆₋₁₀-Arylgruppen, C₆₋₁₂-Arylalkylgruppen und C₆₋₁₂-Alkylarylgruppen ausgewählt ist; und R₃ aus H und geradkettigen, verzweigten oder cyclischen C₁₋₁₂-Alkylgruppen, vorzugsweise H, ausgewählt ist.

4. Verwendung nach einem der Ansprüche 2 bis 3, **dadurch gekennzeichnet, dass** R₁ ausgewählt ist aus H, geradkettigen, verzweigten oder cyclischen C₁₋₁₂-Alkylgruppen, C₆₋₁₀-Arylgruppen, C₆₋₁₂-Arylalkylgruppen und C₆₋₁₂-Alkylarylgruppenund und R₃ in Formel (I) ausgewählt ist aus H, Arylgruppen und geradkettigen, verzweigten oder cyclischen C₁₋₁₂-Alkylgruppen, die auch O oder N-Atome enthalten können, wobei R₁ und R₃ in Formel (I) vorzugsweise jeweils H sind; und R₂ ein n-wertiger Rest ist, der mit n-1 weiteren 2-Oxo-1,3-dioxolan-4-carbonsäureamidgruppen der allgemeinen Formel (II) 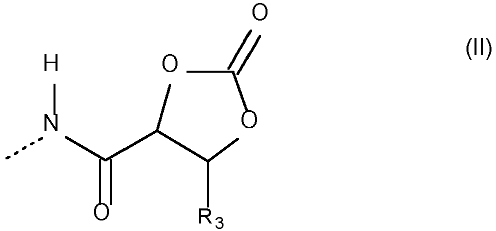
substituiert ist , wobei R₃ in Formel (II) ausgewählt ist aus H, Arylgruppen und geradkettigen, verzweigten oder cyclischen C₁₋₁₂-Alkylgruppen, die auch O oder N-Atome enthalten können, wobei R₃ in Formel (II) vorzugsweise H ist;
und n ein Zahl größer oder gleich 2 ist.

5. Verwendung nach einem der vorhergehenden Ansprüche, **dadurch gekennzeichnet, dass** n = 2 bis 5, vorzugsweise n = 2 bis 3 ist.

6. Verwendung nach einem der vorhergehenden Ansprüche, **dadurch gekennzeichnet, dass** als zweite Komponente des Zweikomponenten-Klebstoffs eine mehrfunktionelle Härterverbindung eingesetzt wird, welche ausgewählt ist aus Polyaminen, die zwei oder mehr Amingruppen aufweisen, und Polyolen, die zwei oder mehr alkoholische Hydroxygruppen aufweisen.

7. Verwendung nach einem der vorhergehenden Ansprüche, **dadurch gekennzeichnet, dass** entweder die Verbindung mit n 2-Oxo-1,3-dioxolan-4-carbonsäureamid-Einheiten und/oder die Härterverbindung mindestens eine lineare oder verzweigte Spacergruppe enthält, wobei die flexible Spacergruppe ein Molekulargewicht von mindestens 200 g/mol aufweist und vorzugsweise ausgewählt ist aus Alkylengruppen, Polyethergruppen, Polycarbonatgruppen, Polyestergruppen und Poly(meth)acrylatgruppen.

8. Verwendung nach einem der vorhergehenden Ansprüche, **dadurch gekennzeichnet, dass** R2 in Formel (I) ausgewählt ist aus der Gruppe bestehend aus linearen oder verzweigten C2- bis C22-Alkylengruppen; Polyethergruppen der allgemeinen Formel -(A-O)ₘ-, wobei A C2- bis C5-Alkylen bedeutet und m eine Zahl von 1 bis 100 ist; Polycarbonatgruppen;, Polyestergruppen; und Poly(meth)acrylatgruppen.

9. Verwendung nach einem der vorhergehenden Ansprüche, **dadurch gekennzeichnet, dass** die Verbindung mit n 2-Oxo-1,3-dioxolan-4-carbonsäureamid-Einheiten ausgewählt ist aus der Gruppe bestehend aus
Verbindungen der Formel (III) 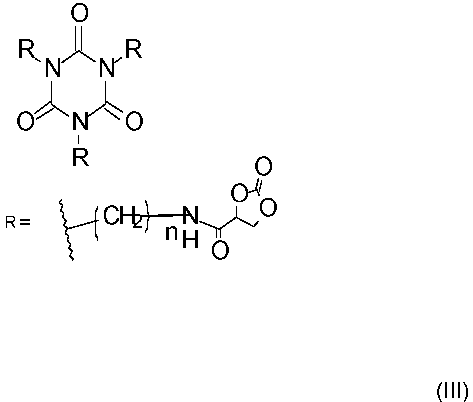
wobei n ein eine Zahl von 1 bis 12 ist ;
Verbindungen der Formel (IV) 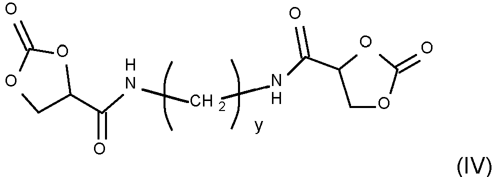
wobei y ein eine Zahl von 1 bis 12 ist ;
Verbindungen der Formel (V) 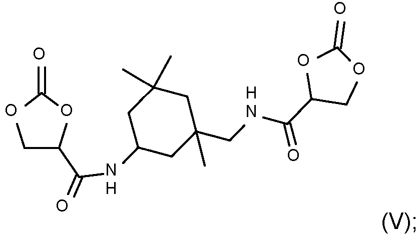
Verbindungen der Formel (VI) 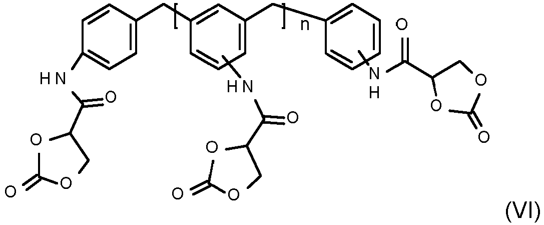
wobei n eine Zahl größer oder gleich 0, vorzugsweise 0 bis 5 bedeutet; und
Verbindungen der Formel (VII) 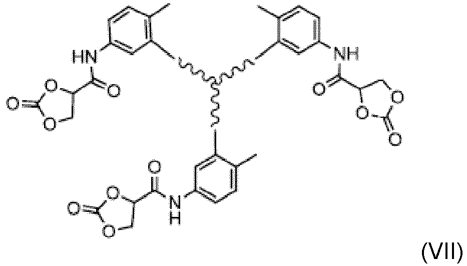 wobei 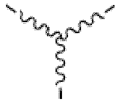 einen alkoxylierten Glycerinrest bedeutet.

10. Zweikomponenten-Klebstoff enthaltend
als reaktive erste Komponente mindestens eine Verbindung mit n 2-Oxo-1,3-dioxolan-4-carbonsäureamid-Einheiten; und
als zweite Komponente mindestens eine Härterverbindung ausgewählt aus Polyaminen und Polyolen;
wobei n ein Zahl größer oder gleich 2 ist;
die Polyamine zwei oder mehr Amingruppen aufweisen; und
die Polyole zwei oder mehr alkoholische Hydroxygruppen aufweisen;
wobei vorzugsweise entweder die Verbindung mit n 2-Oxo-1,3-dioxolan-4-carbonsäureamid-Einheiten und/oder die Härterverbindung mindestens eine lineare oder verzweigte Spacergruppe enthält, wobei die flexible Spacergruppe ein Molekulargewicht von mindestens 200 g/mol aufweist und vorzugsweise ausgewählt ist aus Alkylengruppen, Polyethergruppen, Polycarbonatgruppen, Polyestergruppen und Poly(meth)acrylatgruppen.

11. Zweikomponenten-Klebstoff nach dem vorhergehenden Anspruch, **dadurch gekennzeichnet, dass** er bei Temperaturen von 70 °C oder darunter eine Brookfieldviskosität von kleiner 10 000 mPa s aufweist, gemessen bei 12 U/min mit Spindel 3.

12. Zweikomponenten-Klebstoff gemäß einem der Ansprüche 10 bis 11, **dadurch gekennzeichnet, dass** er mindestens einen Katalysator enthält für die Katalysierung der Reaktion der Cyclocarbonatgruppen mit den funktionellen Gruppen des Härters.

13. Klebeverfahren, wobei zwei Substrate miteinander verklebt werden und auf die Oberfläche mindestens eines der Substrate ein 2-Komponentenklebstoff aufgetragen wird, welcher mindestens eine Verbindung mit n 2-Oxo-1,3-dioxolan-4-carbonsäureamid-Einheiten als reaktive Komponente enthält und n eine Zahl größer oder gleich 2 ist.

14. Klebeverfahren nach dem vorhergehenden Anspruch, wobei es sich um ein Kaschierverfahren zur Herstellung von kaschierten Gegenständen, ausgewählt aus Glanzfolien, Verbundfolien und kaschierten Formkörpern, handelt, wobei man
a) ein erstes Substrat in Form einer ersten Folie zur Verfügung stellt,
b) ein zweites Substrat zur Verfügung stellt, ausgewählt aus Papier, einer zweiten Folie, die zur ersten Folie gleich oder verschieden sein kann, und Formkörpern,
c) einen Zweikomponentenklebstoff gemäß einem der Ansprüche 10 bis 12 zur Verfügung stellt und
d) den Zweikomponentenklebstoff auf das erste Substrat und/oder auf das zweite Substrat aufträgt, optional trocknen lässt und das erste Substrat auf das zweite Substrat aufkaschiert, wobei die Aufkaschierung unter Thermoaktivierung erfolgen kann.

15. Folienkaschierter Gegenstand, hergestellt nach dem Verfahren des vorhergehenden Anspruchs.

## Claims

1. The use of compounds having n 2-oxo-1,3-dioxolane-4-carboxamide units as reactive component in 2-component adhesives, where n is a number greater than or equal to 2, preferably for preparing hydroxypolyurethanes or hydroxypolycarbonates for adhesives applications.

2. The use according to claim 1, wherein the compounds having two or more 2-oxo-1,3-dioxolane-4-carboxamide units have the formula (I) 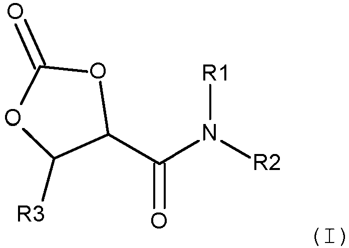 where
R₁ and R₃ independently of one another are selected from H and an organic radical; and
R₂ is an n-valent organic radical which is substituted by n-1 further 2-oxo-1,3-dioxolane-4-carboxamide groups, and n is a number greater than or equal to 2.

3. The use according to claim 2, wherein in formula (I) R₁ is selected from H, straight-chain, branched or cyclic C₁-₁₂ alkyl groups, C₆₋₁₀ aryl groups, C₆₋₁₂ arylalkyl groups and C₆₋₁₂ alkylaryl groups;
and R₃ is selected from H and straight-chain, branched or cyclic C₁₋₁₂-alkyl groups, preferably H.

4. The use according to either of claims 2 and 3, wherein R₁ is selected from H, straight-chain, branched or cyclic C₁-₁₂ alkyl groups, C₆₋₁₀ aryl groups, C₆₋₁₂ arylalkyl groups and C₆₋₁₂ alkylaryl groups and R₃ in formula (I) is selected from H, aryl groups and straight-chain, branched or cyclic C₁-₁₂ alkyl groups, which may also comprise O or N atoms, where R₁ and R₃ in formula (I) are preferably each H;
and R₂ is an n-valent radical which is substituted by n-1 further 2-oxo-1,3-dioxolane-4-carboxamide groups of the general formula (II) 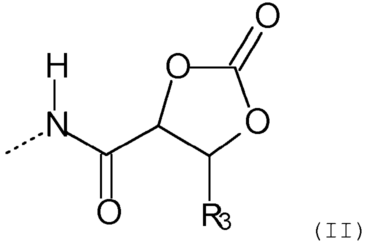
where R₃ in formula (II) is selected from H, aryl groups and straight-chain, branched or cyclic C₁-₁₂ alkyl groups, which may also comprise O or N atoms, where R₃ in formula (II) is preferably H;
and n is a number greater than or equal to 2.

5. The use according to any of the preceding claims, wherein n = 2 to 5, preferably n = 2 to 3.

6. The use according to any of the preceding claims, wherein a polyfunctional curing agent compound is used as a second component of the two-component adhesive and is selected from polyamines which have two or more amine groups and polyols which have two or more alcoholic hydroxyl groups.

7. The use according to any of the preceding claims, wherein either the compound having n 2-oxo-1,3-dioxolane-4-carboxamide units and/or the curing agent compound comprises at least one linear or branched spacer group, where the flexible spacer group has a molecular weight of at least 200 g/mol and is preferably selected from alkylene groups, polyether groups, polycarbonate groups, polyester groups and poly(meth)acrylate groups.

8. The use according to any of the preceding claims, wherein R2 in formula (I) is selected from the group consisting of linear or branched C2 to C22 alkylene groups; polyether groups of the general formula -(A-O)ₘ-, where A is C2 to C5 alkylene and m is a number from 1 to 100; polycarbonate groups; polyester groups; and poly(meth)acrylate groups.

9. The use according to any of the preceding claims, wherein the compound having n 2-oxo-1,3-dioxolane-4-carboxamide units is selected from the group consisting of :
compounds of the formula (III) 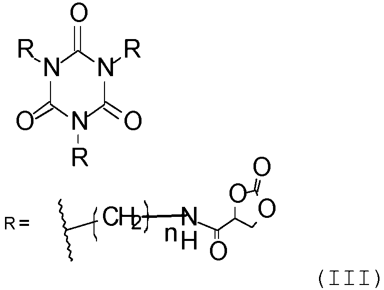
where n is a number from 1 to 12;
compounds of the formula (IV) 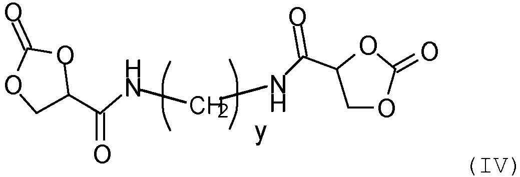
where y is a number from 1 to 12;
compounds of the formula (V) 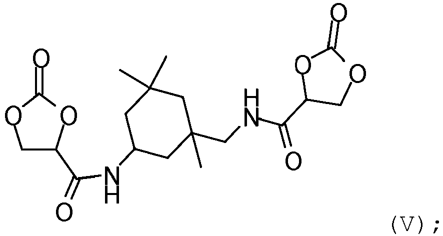 compounds of the formula (VI) 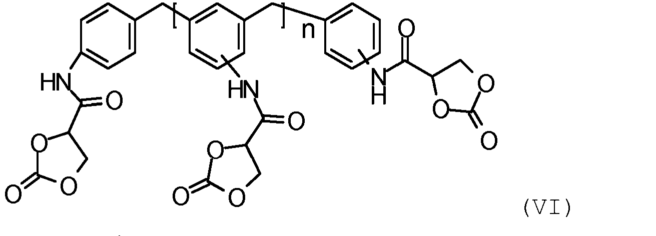
where n is a number greater than or equal to 0, preferably 0 to 5; and
compounds of the formula (VII) 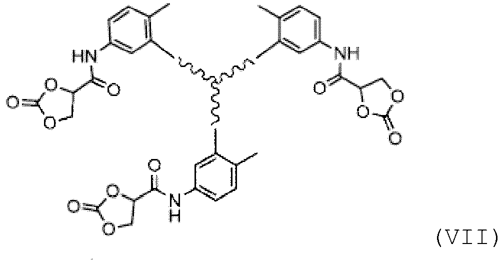
where 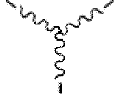 is an alkoxylated glycerol radical.

10. A two-component adhesive comprising as reactive first component, at least one compound having n 2-oxo-1,3-dioxolane-4-carboxamide units; and
as second component, at least one curing agent compound selected from polyamines and polyols;
where n is a number greater than or equal to 2;
the polyamines have two or more amine groups; and
the polyols have two or more alcoholic hydroxyl groups;
where preferably either the compound having n 2-oxo-1,3-dioxolane-4-carboxamide units and/or the curing agent compound comprises at least one linear or branched spacer group, where the flexible spacer group has a molecular weight of at least 200 g/mol and is preferably selected from alkylene groups, polyether groups, polycarbonate groups, polyester groups and poly(meth)acrylate groups.

11. The two-component adhesive according to the preceding claim, which at temperatures of 70°C or below has a Brookfield viscosity of less than 10 000 mPa s, measured at 12 rpm with spindle 3.

12. The two-component adhesive according to either of claims 10 and 11, which comprises at least one catalyst for catalyzing the reaction of the cyclocarbonate groups with the functional groups of the curing agent.

13. An adhesive bonding method wherein two substrates are bonded to one another and, to the surface of at least one of the substrates, a 2-component adhesive is applied which comprises at least one compound having n 2-oxo-1,3-dioxolane-4-carboxamide units as a reactive component, and n is a number greater than or equal to 2.

14. The adhesive bonding method according to the preceding claim, being a laminating method for producing laminated articles selected from high-gloss films, composite films, and laminated moldings, where
a) a first substrate in the form of a first film is provided,
b) a second substrate is provided, selected from paper, a second film, which may be identical to or different from the first film, and moldings,
c) a two-component adhesive according to any of claims 10 to 12 is provided, and
d) the two-component adhesive is applied to the first substrate and/or to the second substrate, and is optionally allowed to dry, and the first substrate is laminated onto the second substrate, it being possible for the lamination to take place with thermal activation.

15. A film-laminated article produced by the method of the preceding claim.

## Revendications

1. Utilisation de composés présentant n motifs amide d'acide 2-oxo-1,3-dioxolane-4-carboxylique en tant que composant réactif dans des adhésifs à 2 composants, n étant un nombre supérieur ou égal à 2, de préférence pour la préparation d'hydroxypolyuréthanes ou d'hydroxypolycarbonates pour des applications adhésives.

2. Utilisation selon la revendication 1, **caractérisée en ce que** les composés présentant deux motifs amide d'acide 2-oxo-1,3-dioxolane-4-carboxylique ou plus présentent la formule (I) 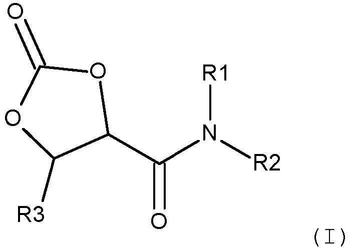 dans laquelle
R₁ et R₃ sont choisis, indépendamment l'un de l'autre, parmi H et un radical organique ; et
R₂ représente un radical organique n-valent qui est substitué par n-1 autres groupes amide d'acide 2-oxo-1,3-dioxolane-4-carboxylique et n représente un nombre supérieur ou égal à 2.

3. Utilisation selon la revendication 2, **caractérisée en ce que** dans la formule (I), R₁ est choisi parmi H, les groupes alkyle en C₁-₁₂ linéaires, ramifiés ou cycliques, les groupes aryle en C₆₋₁₀, les groupe arylalkyle en C₆₋₁₂ et les groupes alkylaryle en C₆₋₁₂ ;
et R₃ est choisi parmi H et les groupes alkyle en C₁-₁₂ linéaires, ramifiés ou cycliques, de préférence H.

4. Utilisation selon l'une des revendications 2 à 3, **caractérisée en ce que** R₁ est choisi parmi H, les groupes alkyle en C₁-₁₂ linéaires, ramifiés ou cycliques, les groupes aryle en C₆₋₁₀, les groupes arylalkyle en C₆₋₁₂ et les groupes alkylaryle en C₆₋₁₂ et R₃ dans la formule (I) est choisi parmi H, les groupes aryle et les groupes alkyle en C₁-₁₂ linéaires, ramifiés ou cycliques, qui peuvent également contenir des atomes O ou N, R₁ et R₃ dans la formule (I) représentant de préférence à chaque fois H ;
et R₂ représente un radical n-valent qui est substitué par n-1 autres groupes amide d'acide 2-oxo-1,3-dioxolane-4-carboxylique de formule générale (II) 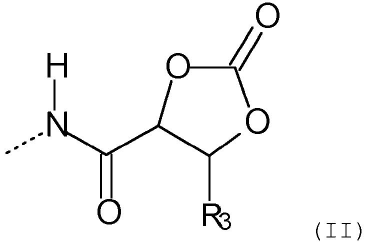
R₃ dans la formule (II) étant choisi parmi H, les groupes aryle et les groupes alkyle en C₁-₁₂ linéaires, ramifiés ou cycliques, qui peuvent également contenir des atomes O ou N, R₃ dans la formule (II) représentant de préférence H ;
et n représente un nombre supérieur ou égal à 2.

5. Utilisation selon l'une des revendications précédentes, **caractérisée en ce que** n = 2 à 5, de préférence n = 2 à 3.

6. Utilisation selon l'une des revendications précédentes, **caractérisée en ce qu'**on utilise, comme deuxième composant de l'adhésif à deux composants, un composé durcisseur polyfonctionnel, qui est choisi parmi les polyamines, qui présentent deux groupes amine ou plus, et les polyols, qui présentent deux groupes hydroxy alcoolique ou plus.

7. Utilisation selon l'une des revendications précédentes, **caractérisée en ce que** soit le composé présentant n motifs amide d'acide 2-oxo-1,3-dioxolane-4-carboxylique et/soit le composé durcisseur contien(nen)t au moins un groupe écarteur linéaire ou ramifié, le groupe écarteur souple présentant une masse moléculaire d'au moins 200 g/mole et étant de préférence choisi parmi les groupes alkylène, polyéther, polycarbonate, polyester et poly(méth)acrylate.

8. Utilisation selon l'une des revendications précédentes, **caractérisée en ce que** R2 dans la formule (I) est choisi dans le groupe constitué par les groupes alkylène en C2-C22 linéaires ou ramifiés ; les groupes polyéther de formule générale -(A-O)ₘ-, dans laquelle A signifie alkylène en C2-C5 et m représente un nombre de 1 à 100 ; les groupes polycarbonate ; les groupes polyester ; et les groupes poly(méth)acrylate.

9. Utilisation selon l'une des revendications précédentes, **caractérisée en ce que** le composé présentant n motifs amide d'acide 2-oxo-1,3-dioxolane-4-carboxylique est choisi dans le groupe constitué par :
les composés de formule (III) 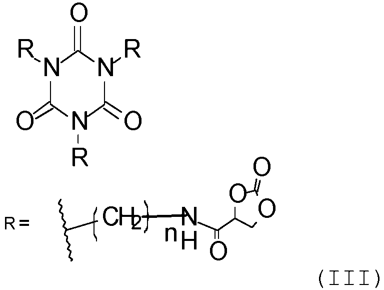
dans laquelle n représente un nombre de 1 à 12 ;
les composés de formule (IV) 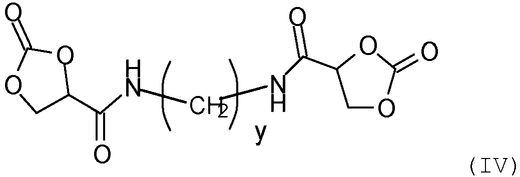
dans laquelle y représente un nombre de 1 à 12 ;
les composés de formule (V) 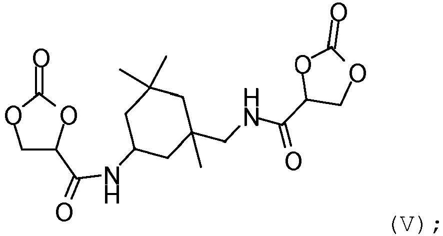
les composés de formule (VI) 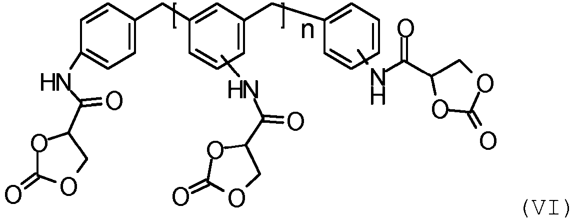
dans laquelle n représente un nombre supérieur ou égal à 0, de préférence 0 à 5 ; et
les composés de formule (VII) 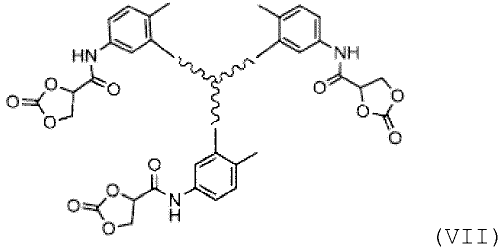
dans laquelle 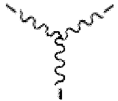 signifie un radical alcoxylé de glycérol.

10. Adhésif à deux composants, contenant
comme premier composant réactif, au moins un composé présentant n motifs amide d'acide 2-oxo-1,3-dioxolane-4-carboxylique ; et
comme deuxième composant, au moins un composé durcisseur choisi parmi les polyamines et les polyols ;
n étant un nombre supérieur ou égal à 2 ;
les polyamines présentant deux groupes amine ou plus ; et
les polyols présentant deux groupes hydroxy alcoolique ou plus ;
de préférence soit le composé présentant n motifs amide d'acide 2-oxo-1,3-dioxolane-4-carboxylique et/soit le composé durcisseur contenant au moins un groupe écarteur linéaire ou ramifié, le groupe écarteur souple présentant une moléculaire masse d'au moins 200 g/mole et étant de préférence choisi parmi les groupes alkylène, polyéther, polycarbonate, polyester et poly(méth)acrylate.

11. Adhésif à deux composants selon la revendication précédente, **caractérisé en ce qu'**il présente, à des températures de 70 °C ou moins, une viscosité selon Brookfield inférieure à 10 000 mPa.s, mesurée à 12 tr/min avec le module 3.

12. Adhésif à deux composants selon l'une des revendications 10 à 11, **caractérisé en ce qu'**il contient au moins un catalyseur pour la catalyse de la réaction des groupes cyclocarbonate avec les groupes fonctionnels du durcisseur.

13. Procédé de collage, deux substrats étant collés l'un avec l'autre et un adhésif à 2 composants étant appliqué sur la surface d'au moins l'un des substrats, lequel adhésif contient au moins un composé présentant n motifs amide d'acide 2-oxo-1,3-dioxolane-4-carboxylique en tant que composant réactif et n étant un nombre supérieur ou égal à 2.

14. Procédé de collage selon la revendication précédente, le procédé étant un procédé de contrecollage pour la fabrication d'objets contrecollés, choisis parmi les feuilles brillantes, les feuilles composites et les corps façonnés contrecollés, dans lequel
a) on met à disposition un premier substrat sous la forme d'une première feuille,
b) on met à disposition un deuxième substrat, choisi parmi un papier, une deuxième feuille, qui peut être identique ou différente de la première feuille, et les corps façonnés,
c) on met à disposition un adhésif à deux composants selon l'une des revendications 10 à 12 et
d) on applique l'adhésif à deux composants sur le premier substrat et/ou sur le deuxième substrat, on laisse éventuellement sécher et on contrecolle le premier substrat sur le deuxième substrat, le contrecollage pouvant avoir lieu sous une thermoactivation.

15. Objet contrecollé par une feuille, fabriqué par le procédé selon la revendication précédente.
